# EUROPÄISCHE PATENTSCHRIFT

(11) **EP 0 936 857 B1**
(45) Veröffentlichungstag und Bekanntmachung des Hinweises auf die Patenterteilung: **04.09.2002**
(21) Anmeldenummer: 97950032.9
(22) Anmeldetag: 27.10.1997
(51) Int. Cl.: A01N 25/10, A01N 25/32

(54) **WIRKSTOFFHALTIGE FORMKÖRPER AUF BASIS BIOLOGISCH ABBAUBARER, THERMOPLASTISCH VERARBEITBARER POLYMERE**
ACTIVE-SUBSTANCE-CONTAINING MOULDED BODIES BASED ON BIODEGRADABLE THERMOPLASTICALLY PROCESSABLE POLYMERS
CORPS MOULES CONTENANT UN PRINCIPE ACTIF, A BASE DE POLYMERES BIODEGRADABLES POUVANT SUBIR DES TRAITEMENTS THERMOPLASTIQUES

(30) Priorität: 07.11.1996 DE 19645919
(43) Veröffentlichungstag der Anmeldung: 25.08.1999
(73) Patentinhaber: BAYER AG, 51368 Leverkusen (DE)
(72) Erfinder: MÜLLER, Hanns, Peter, D-51519 Odenthal-Höffe (DE); HACKEMÜLLER-BRUNS, Doris, D-40221 Düsseldorf (DE); GRUTTMANN, Horst, D-51375 Leverkusen (DE); HEESCHEN, Kerstin, D-51381 Leverkusen (DE)
(86) Internationale Anmeldenummer: EP9705933
(87) Internationale Veröffentlichungsnummer: WO98019532

(56) Entgegenhaltungen:
- EP-A- 0 542 080
- EP-A- 0 564 945
- EP-A- 0 641 817
- EP-A- 0 763 510
- WO-A-91/03940
- US-A- 4 554 155
- DATABASE WPI Section Ch, Week 9624 Derwent Publications Ltd., London, GB; Class A97, AN 96-235896 XP002086347 & JP 08 092006 A (SHOWA DENKO KK) , 9. April 1996

## Beschreibung

Die vorliegende Erfindung betrifft neue wirkstoffhaltige Formkörper auf Basis thermoplastisch verarbeitbarer, biologisch abbaubarer Polymere, bevorzugt Polyester, Polyesteramide, Polyesterurethane und Polyesterurethanharnstoffe, deren Herstellung und Verwendung zur Bekämpfung von Parasiten auf, am und in der Umgebung von Wirtstieren, die gegebenenfalls nach Gebrauch zur Bekämpfung von pflanzenschädigenden Insekten auf Freiland- oder Zimmerpflanzen dienen.

Formkörper, die Wirkstoffe zur Kontrolle von Schädlingen enthalten, sind bekannt. Sie basieren auf der langsamen Freisetzung von Wirkstoffen aus einer wirkstoffhaltigen Trägermatrix von Kunststoffen (vergl. z.B. Aries et al US-P 3 814 061, Greeberg US-P 3 918 407, Miller et al US-P 3 944 662, Millionis et al US-P 4 041 151, Pasarela USP 4 145 409, Greenberg und Cloud US-P 4 158 051, v. Bittera et al US-P 4 225 578, Mc Daniel et al EP-OS 0 052 411, Grubb et al US-P 3 852 416 und Pearce US-P 4 536 388).

Der bei bekannten Formkörpern in der Praxis fast ausschließlich eingesetzte Träger ist PVC. Andere Träger werden in der Literatur zwar erwähnt, haben aber bis jetzt keinen Eingang in die Praxis gefunden. So wird in US-P 4 195 075 unter anderem erwähnt, daß als Trägerpolymere für Ohrmarken auch thermoplastische Elastomere in Frage kommen. Auch in diesem Zitat werden jedoch ausschließlich Beispiele mit weichmacherhaltigem PVC als Trägerpolymer beschrieben.

Dies ist auch nicht erstaunlich. PVC ist preiswert und leicht zugänglich. Es ist auch in breiten Bereichen mit anderen Stoffen, insbesondere Weichmachern, mischbar. Diese Weichmacher haben bei wirkstoffhaltigen PVC-Körpern die Funktion, den Wirkstoff im Träger gelöst zu halten und ihn langsam an die Körperoberfläche zu transportieren. Dort verdampft der Wirkstoff oder er wird zusammen mit dem Weichmacher von der Oberfläche abgerieben. Das Zusammenwirken der drei Komponenten PVC-Träger, Weichmacher und Wirkstoff bestimmt, ob und wieweit der Formkörper praktisch einsetzbar ist.

Wird eine Komponente des Gesamtsystems geändert, läßt sich nicht mehr vorhersehen, ob das System in der Praxis noch wirkt. Dies trifft besonders zu, falls der Weichmacher, dem ja beim Wirkstofftransport eine Schlüsselfunktion zukommt, geändert oder weggelassen wird.

Aus verschiedenen Gründen ist es wünschenswert, PVC als Trägermaterial zu ersetzen.

Wirkstoffhaltige Formkörper auf Basis thermoplastisch verarbeitbarer Elastomerer (TPE) sind in EP-A 542 080, 542 081, 542 078 beschrieben.

Die bekannten Systeme haben den Nachteil, daß ihre Wirkung rasch unzureichend wird, obwohl in den Polymeren oft noch mehr als 90 Gew.-% des ursprünglich eingesetzten Wirkstoffs vorhanden ist. Dies ist sehr unwirtschaftlich.

Die erfindungsgemäßen Systeme erlauben es, nachdem sie zur Bekämpfung von Parasiten auf, um und in der Umgebung von Wirtstieren eingesetzt worden sind, den in ihnen verbleibenden Wirkstoff wirtschaftlich zu verwerten. Sie werden dazu gegebenenfalls nach Granulieren oder Mahlen als Mittel zur Bekämpfung von Schädlingen an Pflanzen im Boden eingesetzt.

Es war überraschend, daß die erfindungsgemäßen wirkstoffhaltigen Formkörper biologisch vollständig unter Freisetzung des in ihnen enthaltenen Wirkstoffs abgebaut werden. Der Fachmann mußte erwarten, daß die in die Polymermatrix eingearbeiteten Wirkstoffe den biologischen Abbau von an sich biologisch abbaubaren Polymeren behindern oder unterbinden.

Gegenstand der vorliegenden Erfindung sind:
1. die Verwendung von Polymergemischen enthaltend
   - einen Wirkstoff
   - biologisch abbaubare Polymere ausgewählt aus der Gruppe bestehend aus Polyesteramiden, thermoplastischen Polyesterurethanen und Polyurethanharnstoffen
   - gegebenenfalls Weichmacher
   - gegebenenfalls übliche Zusätze
   als Formkörper zur Bekämpfung von Parasiten auf, an und in der Umgebung von Tieren.
2. Wirkstoffhaltige Formkörper, dadurch gekennzeichnet, daß sie als Träger biologisch abbaubare Polyesteramide, gegebenenfalls Weichmacher sowie gegebenenfalls übliche Zusätze enthalten.
3. Verfahren zur Herstellung wirkstoffhaltiger Formkörper, dadurch gekennzeichnet, daß man biologisch abbaubare Polymere, bevorzugt thermoplastische Polyesteramide mit Wirkstoffen, gegebenenfalls Weichmachern und gegebenenfalls üblichen Zusätzen vermischt und in üblicher Weise verarbeitet.
4. Verwendung der Polymer-Gemische gemäß 1 und 2 (oben) als Formkörper, bevorzugt Bänder, Medaillons und Ohrmarken zur Bekämpfung von Parasiten auf oder an Tieren sowie nach Gebrauch gegebenenfalls nach Zerkleinern, Granulieren oder Mahlen als Bodengranulate zur Bekämpfung von pflanzenschädigenden Insekten auf Freiland- oder Zimmerpflanzen.

Biologisch abbaubare Polymere sind solche, die die im Entwurf der Vorschrift DIN 54 900-1 beschriebenen Prüfbedingungen erfüllen.

Beispiele für biologisch abbaubare Polymere sind Polyesteramide, Polyesterurethane, Polyurethanharnstoffe und ihre Blends.

Die Herstellung geeigneter Polyesteramide ist in EP-A 641 817 beschrieben. Auf die dort beschriebenen Polyesteramide wird besonders Bezug genommen. Polyesteramide sind erfindungsgemäß besonders geeignet.

Die Herstellung und Verwendung thermoplastischer Polyesterurethane als kompostierbare Kunststoffe ist in EP 0 593 975 beschrieben.

Die Herstellung geeigneter Polyurethanharnstoffe ist in WO 96/1780 und WO 96/2161 beschrieben. Auf die dort beschriebenen Polyurethanharnstoffe wird besonders Bezug genommen. Polyurethanharnstoffe sind erfindungsgemäß besonders geeignet.

Solche thermoplastisch verformbare, biologisch abbaubaren Harnstoffgruppen aufweisende Polyurethane werden nach bekannten Verfahren unter Einhaltung eines Äquivalentverhältnisses von Isocyanatgruppen zu gegenüber Isocyanatgruppen reaktionsfähigen Gruppen von 1:1 bis 2:1 aus
a) einer Diisocyanatkomponente, bestehend aus
   a1) Hexamethylendiisocyanat oder
   a2) Gemischen aus Hexamethylendiisocyanat mit insgesamt bis zu 60 Gew.-%, bezogen auf Gemisch, 1-Isocyanato-3,3,5-trimethyl-5-isocyanatomethyl-cyclohexan und/oder 4,4'-Diisocyanatodicyclohexylmethan und/oder 1-Methyl-2,4(6)-diisocyanatocyclohexan mit
b) einer Diolkomponente, bestehend aus
   b1) mindestens einem Polyesterdiol eines aus dem Hydroxylgruppengehalt berechenbaren Molekulargewicht von 500 bis 10 000 aus (i) Adipinsäure und/oder Bernsteinsäure und (ii) mindestens einem Alkandiol mit 2 bis 6 Kohlenstoffatomen oder
   b2) einem Gemisch derartiger Polyesterdiole mit bis zu 32 Gew.-%, bezogen auf das Gesamtgewicht der Komponente b), an gegebenenfalls Ethergruppen aufweisenden Alkandiolen mit 2 bis 6 Kohlenstoffatomen,
c) einer Diaminkomponente in einer Menge von 2 bis 50 Äquivalent-%, bezogen auf die Gesamtmenge der in den Komponenten b) und c) vorliegenden, gegenüber Isocyanatgruppen reaktionsfähigen Gruppen, bestehend aus
   c1) Diaminosulfonaten der allgemeinen Formel

      H₂N-(-CH₂-)ₙ-NH-(-CH₂-)ₘ-SO₃Me

      oder
   c2) Gemischen aus Diaminosulfonaten c1) mit bis zu 90 Gew.-%, bezogen auf das Gesamtgewicht der Komponente c), an Ethylendiamin, gegebenenfalls
d) hydrophilen Polyetheralkoholen der allgemeinen Formel

   H-X-O-R

   in einer Menge von bis zu 10 Gew.-%, bezogen auf das Gesamtgewicht der Komponenten b), c) und d) sowie gegebenenfalls
e) Wasser, welches nicht in die Berechnung des Äquivalentverhältnisses von Isocyanatgruppen zu gegenüber Isocyanatgruppen reaktionsfähigen Gruppen eingeht,
hergestellt, wobei in den genannten allgemeinen Formeln
- m und n: unabhängig voneinander für Zahlen von 2 bis 6 stehen,
- Me: für Kalium oder Natrium steht,
- R: für einen einwertigen Kohlenwasserstoffrest mit 1 bis 12 Kohlenstoffatomen steht, und
- X: eine Polyalkylenoxid-Kette des Molekulargewichtsbereichs 88 bis 4000 bedeutet, deren Alkylenoxideinheiten zumindest zu 40 % aus Ethylenoxideinheiten und zum Rest aus Propylenoxideinheiten bestehen.

Die Harnstoffgruppen aufweisenden Polyurethane werden z.B. in Form von 20 bis 50, vorzugsweise 40 bis 50 gew.-%igen wäßrigen Dispersionen eingesetzt.

Die Diisocyanatkomponente a) besteht vorzugsweise ausschließlich aus Hexamethylendiisocyanat.

Die Diolkomponente b) besteht entweder aus b1) mindestens einem Polyesterdiol oder b2) aus einem Gemisch aus mindestens einem Polyesterdiol b1) mit bis zu 32, vorzugsweise bis zu 10 Gew.-% mindestens eines, gegebenenfalls Ethergruppen aufweisenden Alkandiols mit 2 bis 6 Kohlenstoffatomen.

Geeignete Polyesterdiole b1) sind solche eines aus dem Hydroxylgruppengehalt errechenbaren Molekulargewichts 500 bis 10 000, vorzugsweise 1 000 bis 2 500 auf Basis von (i) Adipinsäure und/oder Bernsteinsäure und (ii) gegebenenfalls Ethergruppen aufweisenden Alkandiolen mit 2 bis 6 Kohlenstoffatomen wie z.B. Ethylenglykol, Diethylenglykol, 1,4-Butandiol, Neopentylglykol und/oder 1,6-Hexandiol. Polyesterdiole, bei deren Herstellung ausschließlich Ethylenglykol und/oder 1,4-Butandiol als Diol eingesetzt worden sind, sind besonders bevorzugt.

Bei den gegebenenfalls als Hydroxylgruppen aufweisenden Kettenverlängerungsmitteln mitzuverwendenden, gegebenenfalls Ethergruppen aufweisenden Alkandiolen mit 2 bis 6 Kohlenstoffatomen handelt es sich um solche der soeben beispielhaft genannten Art.

Die Diaminkomponente c) besteht entweder aus c1) aus Diaminosulfonaten der bereits obengenannten allgemeinen Formel oder aus c2) Gemischen derartiger Diaminosulfonate mit Ethylendiamin, welches, falls überhaupt, in Mengen von bis zu 90, vorzugsweise bis zu 70 Äquivalent-%, bezogen auf die gegenüber Isocyanatgruppen reaktionsfähigen Aminogruppen der Komponente c) zum Einsatz gelangt. Ganz besonders bevorzugte Diaminosulfonate sind die Kalium- oder Natriumsalze der N-(2-Aminoethyl)-2-aminoethansulfonsäure.

Die Diaminkomponente c) wird im allgemeinen in einer Menge von 1 bis 10, vorzugsweise 2 bis 5 Gew.-%, bezogen auf das Gewicht der Komponente b) mitverwendet.

Bei der gegebenenfalls mitzuverwendenden Aufbaukomponente d) handelt es sich um hydrophile, einwertige Polyetheralkohole der allgemeinen Formel

H-X-O-R

in welcher
- R und X: die bereits obengenannte Bedeutung haben.

Bevorzugt sind solche derartige Polyetheralkohole, für welche
- R: für einen aliphatischen Kohlenwasserstoffrest mit 1 bis 4 Kohlenstoffatomen steht und
- X: für eine Polyalkylenoxidkette des Molekulargewichtsbereichs 500 bis 4 000 steht, in welcher mindestens 40, insbesondere mindestens 70 und besonders bevorzugt 100 % der vorliegenden Alkylenoxideinheiten, Ethylenoxideinheiten und die restlichen Alkylenoxideinheiten Propylenoxideinheiten darstellen.

Die Herstellung derartiger einwertiger Polyetheralkohole geschieht durch an sich bekannte Alkoxylierung geeigneter Startermoleküle R-OH wie beispielsweise Methanol, n-Butanol, n-Hexanol oder n-Dodecanol unter bevorzugter Verwendung von Ethylenoxid und gegebenenfalls Propylenoxid, in, den oben gemachten Ausführungen entsprechenden Mengenverhältnissen der Alkylenoxide. Hierbei können die genannten Alkylenoxide als Gemisch und/oder nacheinander zum Einsatz gelangen.

Die einwertigen Polyetheralkohole d) werden, falls überhaupt, in Mengen von bis zu 10, vorzugsweise bis zu 3 Gew.-%, bezogen auf das Gesamtgewicht der Komponenten b), c) und d) eingesetzt.

Als weitere, gegebenenfalls in Betracht kommende Aufbaukomponente bei der Herstellung der Harnstoffgruppen aufweisenden Polyurethane ist e) Wasser zu nennen, welches insbesondere dann als Reaktant in Betracht zu ziehen ist, wenn bei der Herstellung der Polyurethane die in letzter Stufe durchzuführende Kettenverlängerungsreaktion von vorab hergestellten NCO-Prepolymeren in wäßrigem Medium erfolgt, insbesondere dann, wenn die in dem Wasser gelösten Diamine c) in, bezogen auf die NCO-Gruppen der NCO-Prepolymeren in unteräquivalenten Mengen zum Einsatz gelangen.

Neben diesen Aufbaukomponenten kommen im Prinzip auch trifunktionelle Verbindungen in untergeordneten Mengen in Betracht wie beispielsweise Glycerin oder Trimethylolpropan, die entweder in geringen Mengen in die Polyester b1) eingebaut oder in freier Form als Teil der Komponente b2) zum Einsatz gelangen können. Die Mitverwendung von derartigen verzweigenden Molekülen muß in der Regel durch monofunktionelle Verbindungen ausgeglichen werden, so daß, rein rechnerisch, wieder lineare Polymere resultieren.

Die Herstellung der Harnstoffgruppen aufweisenden Polyurethane aus den beispielhaft genannten Aufbaukomponenten kann nach beliebigen Verfahren des Standes der Technik erfolgen. Vorzugsweise wird jedoch nach dem bekannten Prepolymerverfahren gearbeitet, und zwar dergestalt, daß man aus den Komponenten b) und gegebenenfalls d) sowie der Diisocyanatkomponente a) unter Einhaltung eines NCO/OH-Äquivalentverhältnisses von 1,5:1 bis 4:1, vorzugsweise 1,8:1 bis 2,5:1 ein NCO-Prepolymer bzw. -Semiprepolymer herstellt und dieses anschließend mit der Komponente c) unter Kettenverlängerung zur Reaktion bringt.

Dabei wird das Prepolymer bzw. Semiprepolymer im allgemeinen lösungsmittelfrei bei Temperaturen von 20 bis 150°C hergestellt und anschließend in einem geeigneten Lösungsmittel gelöst. Selbstverständlich kann die Bildung der Prepolymeren bzw. Semiprepolymeren auch direkt in einem Lösungsmittel erfolgen. Als Lösungsmittel kommen insbesondere gegenüber Isocyanatgruppen inerte, mit Wasser unbegrenzt mischbare Lösungsmittel in Betracht. Bevorzugt wird Aceton als Lösungsmittel verwendet.

Die so hergestellten Prepolymeren bzw. Semiprepolymeren werden in der zweiten Reaktionsstufe mit der Komponente c) unter Kettenverlängerung zur Reaktion gebracht. Hierbei liegt das Äquivalentverhältnis von Isocyanatgruppen der Prepolymeren bzw. Semiprepolymeren einerseits zu gegenüber Isocyanatgruppen reaktionsfähigen Aminogruppen der Komponente c) andererseits bei 1:1 bis 20:1, vorzugsweise 1,2:1 bis 4:1. Die Kettenverlängerungsreaktion kann in Lösung, vorzugsweise in acetonischer Lösung oder auch in wäßrigem Milieu dergestalt erfolgen, daß man die Lösung der Prepolymeren bzw. Semiprepolymeren in organischem Lösungsmittel mit einer Lösung der Komponente c) in Wasser unter intensivem Durchmischen vereinigt. Wie bereits angedeutet, erfolgt gegebenenfalls hierbei auch eine Kettenverlängerungsreaktion durch Reaktion der NCO-Gruppen der Prepolymeren bzw. Semiprepolymeren mit dem Wasser. Bei der genannten, bevorzugten 2-stufigen Herstellung der Harnstoffgruppen aufweisenden Polyurethane werden die Äquivalentverhältnisse zwischen Isocyanatgruppen und gegenüber Isocyanatgruppen reaktionsfähigen Gruppen der beiden Reaktionsstufen im Rahmen der gemachten Offenbarung so gewählt, daß das Gesamtverhältnis von Isocyanatgruppen zu gegenüber Isocyanatgruppen reaktionsfähigen Gruppen der Komponenten b) bis d) dem oben angegebenen Verhältnis von 1:1 bis 2:1 entspricht. Das Wasser geht auf keinen Fall in die Berechnung der genannten Äquivalentverhältnisse ein.

Die Kettenverlängerungsreaktion erfolgt im allgemeinen innerhalb des Temperaturbereichs von 20 bis 50°C.

Die erfindungsgemäßen Formkörper enthalten einen oder mehrere thermoplastisch verarbeitbare, biologisch abbaubare Polyesteramide. Hierunter sind Polymere dieses Typs zu verstehen, die aliphatische Estergruppen und aliphatische Amid-Gruppen aufweisen und kompostierbar sind, also unter dem Einfluß von Mikroorganismen bereits unter milden Bedingungen vollständig abgebaut werden.

Bevorzugt sind derartige Polyesteramide mit statistischer Anordnung der Ester-und Amid-Segmente und mit einem durchschnittlichen Molekulargewicht zwischen 5 000 und 100 000, vorzugsweise zwischen 10 000 und 50 000, besonders bevorzugt zwischen 10 000 und 35 000, bezogen auf das Zahlenmittel-Molekulargewicht.

Besonders bevorzugt sind Polyesteramide, die sich von Monomeren aus den Gruppen
- der Dialkohole, wie Ethylenglykol, 1,4-Butandiol, 1,3-Propandiol, 1.6-Hexandiol, Diethylenglykol usw.,
- der Trialkohole,
- der Dicarbonsäure, wie Oxalsäure, Bernsteinsäure, Adipinsäure usw. bzw., derer Methyl-, Ethyl- usw, -Ester,
- der Hydroxycarbonsäuren, wie Milchsäure, und der Lactone, wie Caprolacton usw.,
- der Aminoalkohole, wie Ethanolamin, Propanolamin usw.,
- der cyclischen Lactame, wie ε-Caprolactam, Laurinlactam usw.,
- der ω-Aminocarbonsäuren, wie Aminocapronsäure usw., und/oder
- von Mischungen (1:1-Salze) aus Dicarbonsäuren, wie Adipinsäure, Bernsteinsäure usw., und Diaminen, wie Hexamethylendiamin, Diaminobutan usw.,
   und/oder
- der hydroxyl- oder säureterminierten Polyester mit Molekulargewichten zwischen 200 und 10 000 als esterbildende Komponente
ableiten.

Ganz besonders bevorzugt sind Polyesteramide, die sich von
- cyclischen Lactamen, wie ε-Caprolactam, als amidbildende Komponente und
- 1,4-Butandiol und Adipinsäure als esterbildende Komponenten
ableiten und einen Esteranteil zwischen 30 und 80 Gew.-%, vorzugsweise zwischen 35 und 65 Gew.-%, besonders bevorzugt zwischen 35 und 55 Gew.-% aufweisen.

Die Polyesteramide können 0,1 bis 5 Gew.-%, vorzugsweise 0,1 bis 2 Gew.-% an Verzweigern enthalten. Als Verzweiger vorzugsweise in Betracht kommen trifunktionelle Alkohole, wie Trimethylolpropan oder Glycerin, ferner tetrafunktionelle Alkohole, wie Pentaerythrit, und auch trifunktionelle Carbonsäuren, wie Citronensäure.

Die in den erfindungsgemäßen Formkörpern enthaltenen Polyesteramide sind bekannt oder lassen sich nach bekannten Methoden herstellen (vgl. EP-A 0 641 817).

Als Zumischkomponenten, die in den Polyesteramiden enthalten sein können, kommen übliche thermoplastisch verarbeitbare und biologisch abbaubare Polymere in Betracht. Vorzugsweise in Frage kommen Polyester, Polyetherester, Copolyester, Polyanhydride, Polyesterurethan-harnstoffe, Polyesterurethane, thermoplastische Polysaccharide oder Polysaccharid-Derivate, und auch Polyester, Polyetherester und Polyesteramide, die aliphatische und aromatische Estergruppierungen enthalten.

Besonders bevorzugte Zumischkomponenten sind Polyester, wie Polylactid, Polyglycolid, Polycaprolacton, Polyhydroxyalkanolate, Polyasparaginsäure und Polytartrate, ferner thermoplastische Polysaccharide, wie Celluloseester, Cellulosether, Celluloseetherester und Stärke-Derivate, wie Stärkeester, und auch thermoplastische Stärke.

Der Gehalt an zusätzlichen Polymerkomponenten in den Polyesteramiden kann innerhalb eines größeren Bereichs variiert werden, und zwar im allgemeinen zwischen 1 und 80 Gew.-%, vorzugsweise zwischen 5 und 50 Gew.-%.

Die erfindungsgemäßen Formkörper enthalten einen oder mehrere agrochemische Wirkstoffe.

Als Wirkstoffe für die erfindungsgemäßen Formkörper seien bevorzugt Insektizide, insbesondere Parasitizide zur Verwendung an Tieren genannt. Zu den Insektiziden gehören Agonisten oder Antagonisten der nicotinergen Acetylcholinrezeptoren von Insekten, phosphorhaltige Verbindungen wie Phosphor- oder Phosphonsäureester, natürliche und synthetische Pyrethroide, Carbamate, Amidine, Juvenilhormone und juvenilhormonartige Substanzen.

Agonisten oder Antagonisten der nicotinergen Acetylcholinrezeptoren von Insekten sind bekannt z.B. aus Europäische Offenlegungsschriften Nr. 580 553, 464 830, 428 941, 425 978, 386 565, 383 091, 375 907, 364 844, 315 826, 259 738, 254 859, 235 725, 212 600, 192 060, 163 855, 154 178, 136 636, 303 570, 302 833, 306 696, 189 972, 455 000, 135 956, 471 372, 302 389; Deutsche Offenlegungsschriften Nr. 3 639 877, 3 712 307; Japanische Offenlegungsschriften Nr. 03 220 176, 02 207 083, 63 307 857, 63 287 764, 03 246 283, 04 9371, 03 279 359, 03 255 072; US-Patentschriften Nr. 5 034 524, 4 948 798, 4 918 086, 5 039 686, 5 034 404; PCT-Anmeldungen Nr. WO 91/17 659, 91/4965; Französische Anmeldung Nr. 2 611 114; Brasilianische Anmeldung Nr. 88 03 621.

Auf die in diesen Publikationen beschriebenen Verbindungen und ihre Herstellung wird hiermit ausdrücklich Bezug genommen.

Diese Verbindungen lassen sich bevorzugt durch die allgemeine Formel (A) wiedergeben 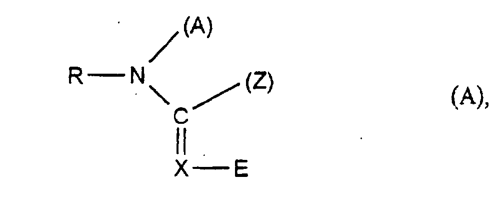 in welcher
- R: für Wasserstoff, gegebenenfalls substituierte Reste der Gruppe Acyl, Alkyl, Aryl, Aralkyl, Heteroaryl oder Heteroarylalkyl steht;
- A: für eine monofunktionelle Gruppe aus der Reihe Wasserstoff, Acyl, Alkyl, Aryl steht oder für eine bifunktionelle Gruppe steht, die mit dem Rest Z verknüpft ist;
- E: für einen elektronenziehenden Rest steht;
- X: für die Reste -CH= oder =N- steht, wobei der Rest -CH= anstelle eines H-Atoms mit dem Rest Z verknüpft sein kann;
- Z: für eine monofunktionelle Gruppe aus der Reihe Alkyl, -O-R, -S-R, 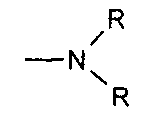 steht
oder für eine bifunktionelle Gruppe steht, die mit dem Rest A oder dem Rest X verknüpft ist.
Besonders bevorzugt sind Verbindungen der Formel (A), in welcher die Reste folgende Bedeutung haben:
- R: steht für Wasserstoff sowie für gegebenenfalls substituierte Reste aus der Reihe Acyl, Alkyl, Aryl, Aralkyl, Heteroaryl, Heteroarylalkyl.
Als Acylreste seien genannt Formyl, Alkylcarbonyl, Arylcarbonyl, Alkylsulfonyl, Arylsulfonyl, (Alkyl-)-(Aryl-)-phosphoryl, die ihrerseits substituiert sein können.
Als Alkyl seien genannt C₁₋₁₀-Alkyl, insbesondere C₁₋₄-Alkyl, im einzelnen Methyl, Ethyl, i-Propyl, sec.- oder t.-Butyl, die ihrerseits substituiert sein können.
Als Aryl seien genannt Phenyl, Naphthyl, insbesondere Phenyl.
Als Aralkyl seien genannt Phenylmethyl, Phenethyl.
Als Heteroaryl seien genannt Heteroaryl mit bis zu 10 Ringatomen und N, O, S insbesondere N als Heteroatomen. Im einzelnen seien genannt Thienyl, Furyl, Thiazolyl, Imidazolyl, Pyridyl, Benzthiazolyl.
Als Heteroarylalkyl seien genannt Heteroarylmethyl, Heteroarylethyl mit bis zu 6 Ringatomen und N, O, S, insbesondere N als Heteroatomen.
Als Substituenten seien beispielhaft und vorzugsweise aufgeführt:
Alkyl mit vorzugsweise 1 bis 4, insbesondere 1 oder 2 Kohlenstoffatomen, wie Methyl, Ethyl, n- und i-Propyl und n-, i- und t-Butyl; Alkoxy mit vorzugsweise 1-bis 4, insbesondere 1 oder 2 Kohlenstoffatomen, wie Methoxy, Ethoxy, n- und i-Propyloxy und n-, i- und t-Butyloxy; Alkylthio mit vorzugsweise 1 bis 4, insbesondere 1 oder 2 Kohlenstoffatomen, wie Methylthio, Ethylthio, n- und i-Propylthio und n-, i- und t-Butylthio; Halogenalkyl mit vorzugsweise 1 bis 4, insbesondere 1 oder 2 Kohlenstoffatomen und vorzugsweise 1 bis 5, insbesondere 1 bis 3 Halogenatomen, wobei die Halogenatome gleich oder verschieden sind und als Halogenatome, vorzugsweise Fluor, Chlor oder Brom, insbesondere Fluor stehen, wie Trifluormethyl; Hydroxy; Halogen, vorzugsweise Fluor, Chlor, Brom und Jod, insbesondere Fluor, Chlor und Brom; Cyano; Nitro; Amino; Monoalkyl-und Dialkylamino mit vorzugsweise 1 bis 4, insbesondere 1 oder 2 Kohlenstoffatomen je Alkylgruppe, wie Methylamino, Methyl-ethyl-amino, n- und i-Propylamino und Methyl-n-butylamino; Carboxyl; Carbalkoxy mit vorzugsweise 2 bis 4, insbesondere 2 oder 3 Kohlenstoffatomen, wie Carbomethoxy und Carboethoxy; Sulfo (-SO₃H); Alkylsulfonyl mit vorzugsweise 1 bis 4, insbesondere 1 oder 2 Kohlenstoffatomen, wie Methylsulfonyl und Ethylsulfonyl; Arylsulfonyl mit vorzugsweise 6 oder 10 Arylkohlenstoffatomen, wie Phenylsulfonyl sowie Heteroarylamino und Heteroarylalkylamino wie Chlorpyridylamino und Chlorpyridylmethylamino.
- A: steht besonders bevorzugt für Wasserstoff sowie für gegebenenfalls substituierte Reste aus der Reihe Acyl, Alkyl, Aryl, die bevorzugt die bei R angegebenen Bedeutungen haben. A steht ferner für eine bifunktionelle Gruppe. Genannt sei gegebenenfalls substituiertes Alkylen mit 1-4, insbesondere 1-2 C-Atomen, wobei als Substituenten die weiter oben aufgezählten Substituenten genannt seien und wobei die Alkylengruppen durch Heteroatome aus der Reihe N, O, S unterbrochen sein können.
- A und Z: können gemeinsam mit den Atomen, an welche sie gebunden sind, einen gesättigten oder ungesättigten heterocyclischen Ring bilden. Der heterocyclische Ring kann weitere 1 oder 2 gleiche oder verschiedene Heteroatome und/oder Heterogruppen enthalten. Als Heteroatome stehen vorzugsweise Sauerstoff, Schwefel oder Stickstoff und als Heterogruppen N-Alkyl, wobei Alkyl der N-Alkyl-Gruppe vorzugsweise 1 bis 4, insbesondere 1 oder 2 Kohlenstoffatome enthält. Als Alkyl seien Methyl, Ethyl, n- und i-Propyl und n-, i- und t-Butyl genannt. Der heterocyclische Ring enthält 5 bis 7, vorzugsweise 5 oder 6 Ringglieder.
Als Beispiele für den heterocyclischen Ring seien Imidazolidin, Pyrrolidin, Piperidin, Piperazin, Hexamethylenimin, Hexahydro-1,3,5-triazin, Hexahydrooxodiazin, Morpholin genannt, die gegebenenfalls bevorzugt durch Methyl substituiert sein können.
- E: steht für einen elektronentziehenden Rest, wobei insbesondere NO₂, CN, Halogenalkylcarbonyl wie 1,5-Halogen-C₁₋₄-carbonyl, insbesondere COCF₃ genannt seien.
- X: steht für -CH= oder -N=
- Z: steht für gegebenenfalls substituierte Reste Alkyl, -OR, -SR, -NRR, wobei R und die Substituenten bevorzugt die oben angegebene Bedeutung haben.
- Z: kann außer dem obengenannten Ring gemeinsam mit dem Atom, an welches es gebunden ist und dem Rest 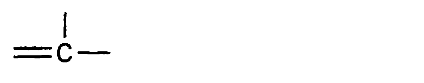 an der Stelle von X einen gesättigten oder ungesättigten heterocyclischen Ring bilden. Der heterocyclische Ring kann weitere 1 oder 2 gleiche oder verschiedene Heteroatome und/oder Heterogruppen enthalten. Als Heteroatome stehen vorzugsweise Sauerstoff, Schwefel oder Stickstoff und als Heterogruppen N-Alkyl, wobei die Alkyl oder N-Alkyl-Gruppe vorzugsweise 1 bis 4, insbesondere 1 oder 2 Kohlenstoffatome enthält. Als Alkyl seien Methyl, Ethyl, n- und i-Propyl und n-, i- und t-Butyl genannt. Der heterocyclische Ring enthält 5 bis 7, vorzugsweise 5 oder 6 Ringglieder.
Als Beispiele für den heterocyclischen Ring seien Pyrrolidin, Piperidin, Piperazin, Hexamethylenimin, Morpholin und N-Methylpiperazin genannt.

Als ganz besonders bevorzugt erfindungsgemäß verwendbare Verbindungen seien Verbindungen der allgemeinen Formeln (II) und (III) genannt: 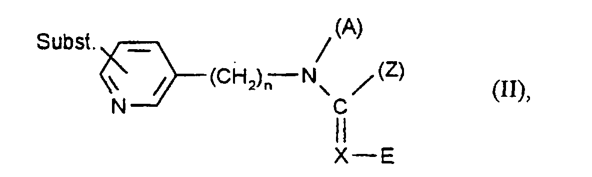 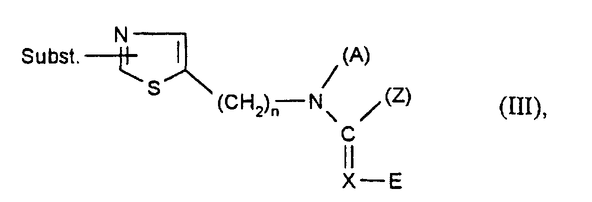 in welchen
- n: für 1 oder 2 steht,
- Subst.: für einen der oben aufgeführten Substituenten, insbesonders für Halogen, ganz besonders für Chlor, steht,
- A, Z, X und E: die oben angegebenen Bedeutungen haben,
Im einzelnen seien folgende Verbindungen genannt:

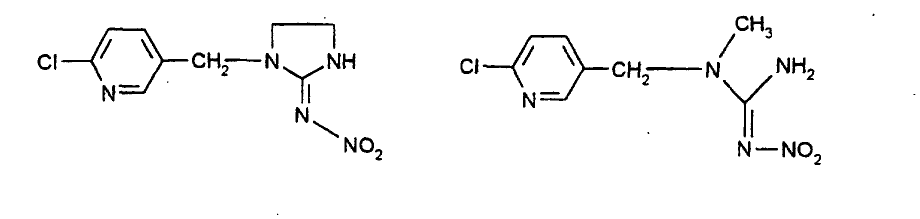

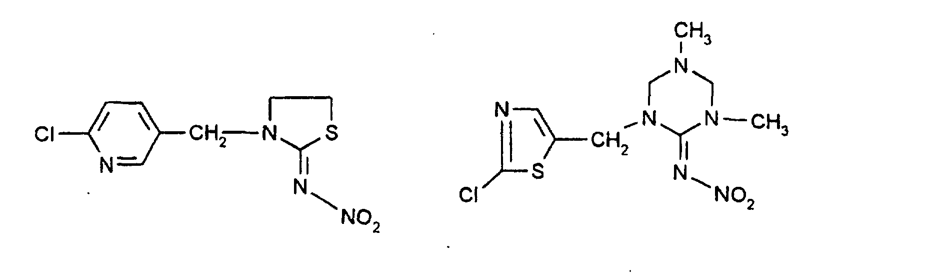

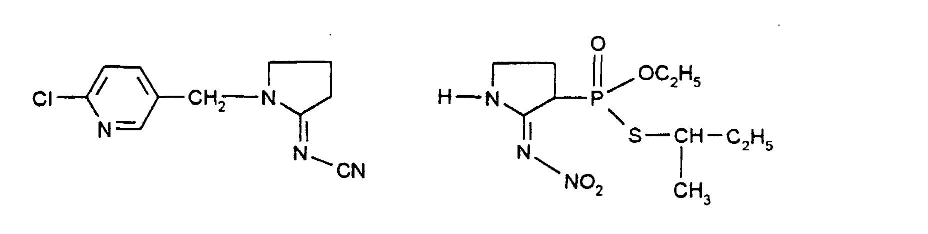

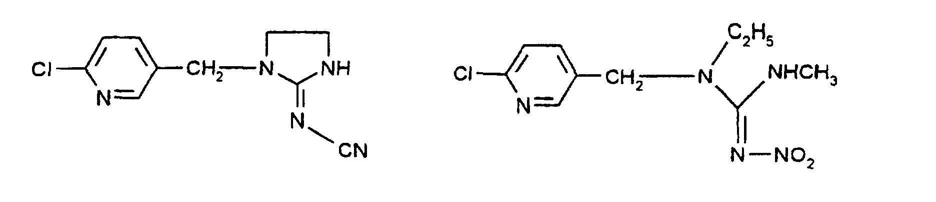

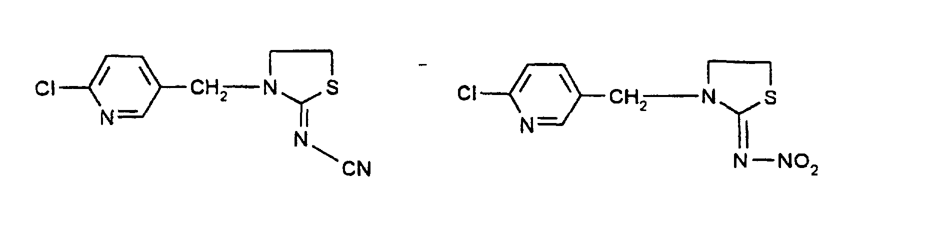

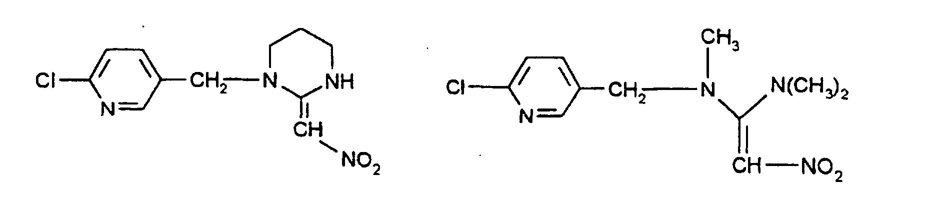

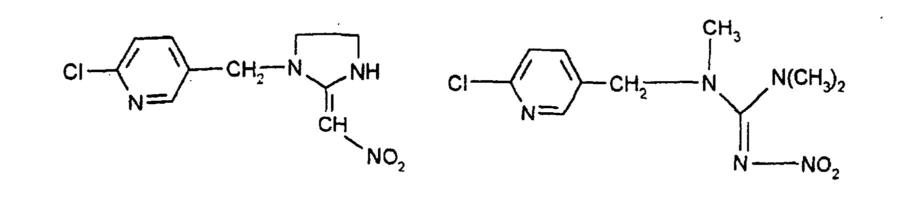

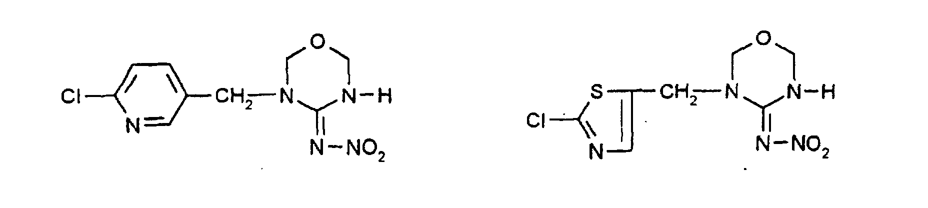

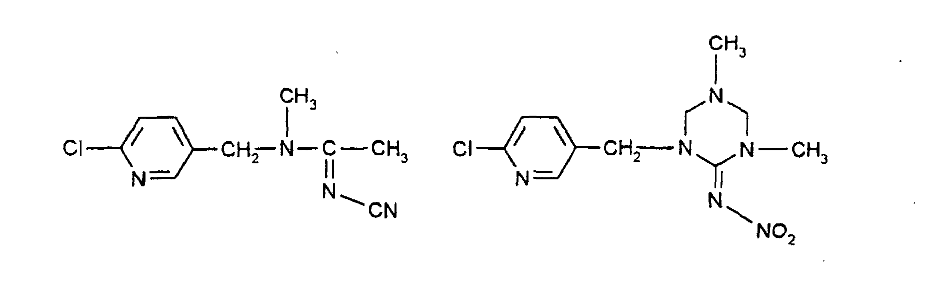

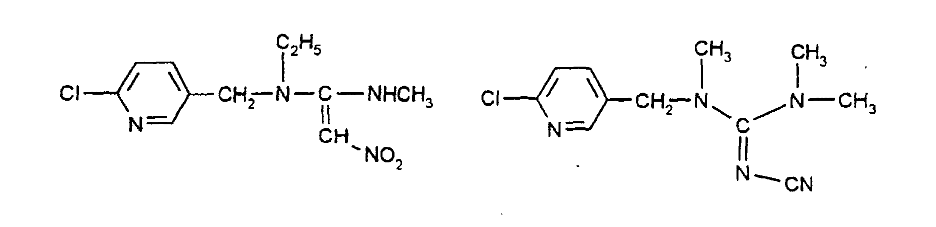

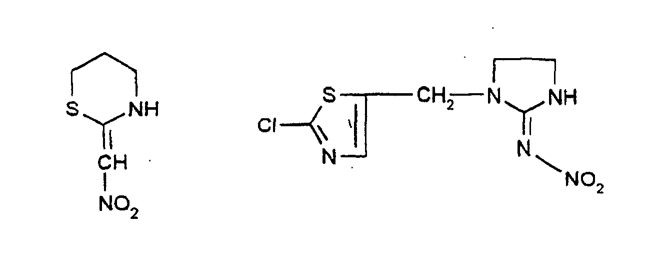

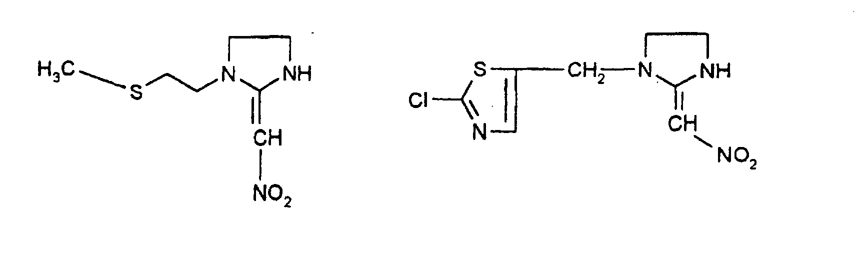

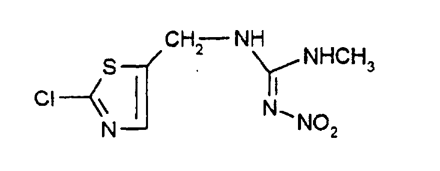

Ganz besonders hervorgehoben folgende Verbindungen:

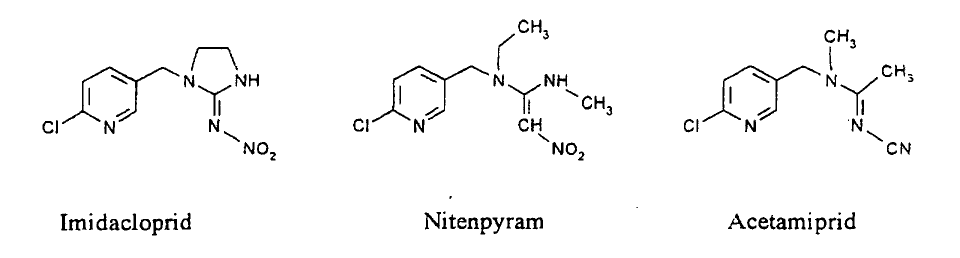

Zu den Phosphor- oder Phosphonsäureestern gehören:
0-Ethyl-0-(8-chinolyl)phenyl-thiophosphat (Quintiofos),
0,0-Diethyl-0-(3-chloro-4-methyl-7-coumarinyl)-thiophosphat (Coumaphos),
0,0-Diethyl-0-phenylglyoxylonitril-oxim-thiophosphat (Phoxim),
0,0-Diethyl-0-cyanochlorbenzaldoxim-thiophosphat (Chlorphoxim),
0,0-Diethyl-0-(4-bromo-2,5-dichlorophenyl)-phosphorothionat (Bromophos-ethyl),
0,0,0',0'-Tetraethyl-S,S'-methylene-di(phosphorodithionat) (Ethion),
2,3-p-Dioxanedithiol-S,S-bis(0,0-diethylphosphorodithionat,
2-Chlor-1-(2,4-dichlorphenyl)-vinyldiethylphosphat (Chlorfenvinphos),
0,0-Dimethyl-0-(3-methyl-4-methylthiophenyl)-thionophosphorsäureester (Fenthion).

Zu den Carbamaten gehören:
2-Isopropoxyphenylmethylcarbamat (Propoxur),
1-Naphthyl-N-methylcarbamat (Carbaryl).

Zu den synthetischen Pyrethroiden zählen Verbindungen der Formel B 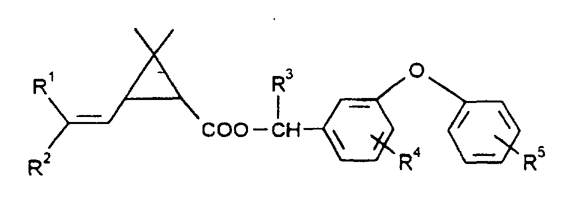 in welcher
- R¹ und R²: für Halogen, gegebenenfalls halogensubstituiertes Alkyl, gegebenenfalls halogensubstituiertes Phenyl stehen,
- R³: für Wasserstoff oder CN steht,
- R⁴: für Wasserstoff oder Halogen steht,
- R⁵: für Wasserstoff oder Halogen steht,
Bevorzugt sind synthetische Pyrethroide der Formel B in welcher
- R¹: für Halogen, insbesondere Fluor, Chlor, Brom steht,
- R²: für Halogen, insbesondere Fluor, Chlor, Brom, Trihalogenmethyl, Phenyl, Chlorphenyl steht,
- R³: für Wasserstoff oder CN steht,
- R⁴: für Wasserstoff oder Fluor steht,
- R⁵: für Wasserstoff steht.
Besonders bevorzugt sind synthetische Pyrethroide der Formel B in welcher
- R¹: für Chlor steht,
- R²: für Chlor, Trifluormethyl, p-Chlorphenyl steht,
- R³: für CN steht,
- R⁴: für Wasserstoff oder Fluor steht,
- R⁵: für Wasserstoff steht.
Insbesondere seien Verbindungen der Formel B genannt in welcher
- R¹: für Chlor steht,
- R²: für Chlor oder p-Chlorphenyl steht,
- R³: für CN steht,
- R⁴: für Fluor in 4-Stellung steht,
- R⁵: für Wasserstoff steht.
Im Einzelnen seien genannt:
3-[2-(4-Chlorphenyl)-2-chlorvinyl]-2,2-dimethyl-cyclopropancarbonsäure [(α-cyano-4-fluor-3-phenoxy)-benzyl]-ester (Flumethrin),
2,2-Dimethyl-3-(2,2-dichlorvinyl)-cyclopropancarbonsäure-α-cyano(4-fluor-3-phenoxy)-benzylester (Cyfluthrin) und seine Enantiomere und Stereoisomere,
α-Cyano-3-phenoxybenzyl(±)-cis, trans-3-(2,2-dibromvinyl)-2,2-dimethylcyclopropancarboxylat (Deltamethrin),
2,2-Dimethyl-3-(2,2-dichlorvinyl)-cyclopropancarbonsäure-α-cyano-3-phenoxybenzylester (Cypermethrin),
3-Phenoxybenzyl(±)-cis, trans-3-(2,2-dichlorvinyl)-2,2-dimethylcyclopropancarboxylat (Permethrin),
α-(p-Cl-phenyl)-isovaleriansäure-α-cyano-3-phenoxy-benzylester (Fenvalerate),
2-Cyano-3-phenoxybenzyl-2-(2-chlor-α,α,α-trifluor-p-toluidino)-3-methylbutyrat (Fluvalinate).

Zu den Amidinen gehören:
3-Methyl-2-[2,4-dimethyl-phenylimino]-thiazolin
2-(4-Chlor-2-methylphenylimino)-3-methylthiazolidin
2-(4-Chlor-2-methylphenylimino)-3-(isobutyl-1-enyl)-thiazolidin
1,5-Bis-(2,4-dimethylphenyl)-3-methyl-1,3,5-triazapenta-1,4-dien (Amitraz).

Zu den Juvenilhormonen oder juvenilhormonartigen Substanzen gehören substituierte Diarylether, Benzoylharnstoffe und Triazinderivate. Zu den Juvenilhormonen und juvenilhormonartigen Substanzen gehören insbesondere Verbindungen der folgenden Formeln:

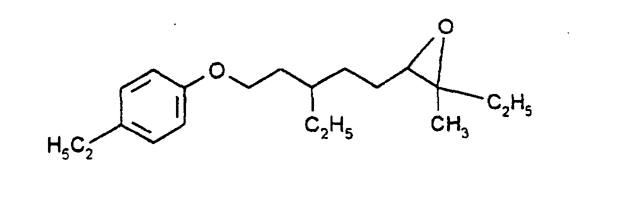

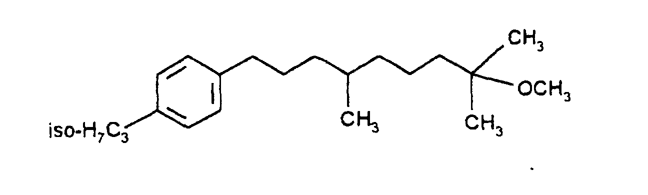

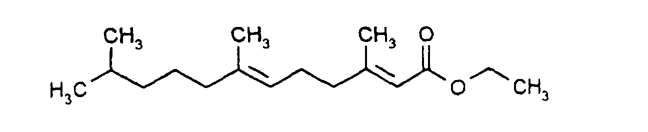

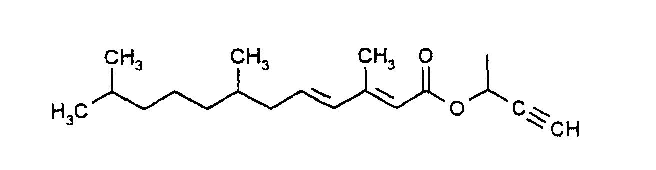

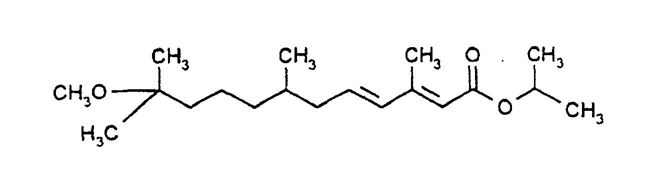

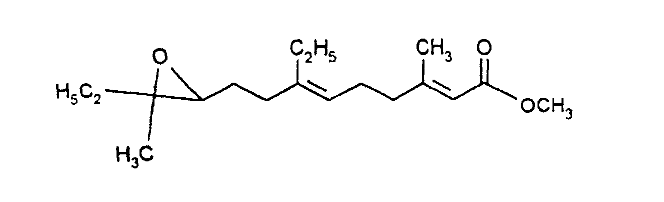

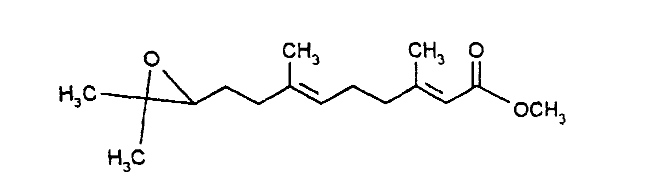

Zu den substituierten Diarylethern gehören insbesondere substituierte Alkoxydiphenylether oder -diphenylmethane der allgemeinen Formel C 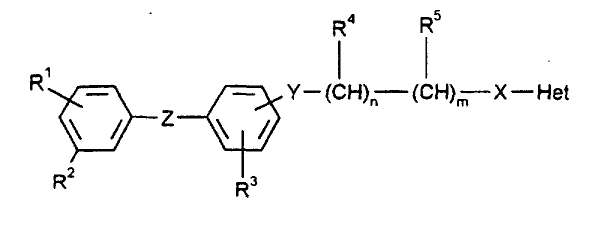 wobei
- R¹: für Wasserstoff, Halogen, Alkyl, Alkoxy, Alkylthio, Halogenalkyl, Halogenalkoxy, Halogenalkylthio, Dioxyalkylen, Dioxyhalogenalkylen, CN, NO₂, Alkenyl, Alkinyl, Alkoxyalkyl, Alkoxyalkoxy, Hydroxyalkoxy steht,
- R²: für die bei R¹ angegebenen Reste steht,
- R³: für die bei R¹ angegebenen Reste steht,
- R⁴: für Wasserstoff, Alkyl, Halogenalkyl oder Halogen steht,
- R⁵: für die bei R⁴ angegebenen Reste steht,
- Het: für gegebenenfalls substituiertes Heteroaryl steht, das nicht über das Heteroatom an den übrigen Rest gebunden ist,
- X, Y: unabhängig voneinander für -O-, -S- stehen
- Z: für -O-, -S-, -CH₂-, -CHCH₃-, -C(CH₃)₂- steht,
- m und n: unabhängig voneinander für 0, 1, 2, 3 stehen ihre Summe aber gleich oder größer 2 ist.
Besonders bevorzugt sind Verbindungen der Formel C
in welcher
- R¹: Wasserstoff, Methyl, Trifluormethyl, Methoxy, Trifluormethoxy, Chlor, Fluor steht
- R²: für Wasserstoff steht,
- R³: für Wasserstoff, Fluor, Chlor, Methyl steht,
- R⁴: für Wasserstoff oder Methyl steht,
- R⁵: für Methyl, Ethyl, Trifluormethyl oder Wasserstoff steht,
- Het: für Pyridyl oder Pyridazinyl steht die gegebenenfalls substituiert sind durch Fluor, Chlor, Methyl, NO₂, Methoxy, Methylmercapto,
- X: für O steht,
- Y: für O steht,
- Z: für O, CH₂ oder -C(CH₃)₂- steht,
- m: für 1 steht,
- n: für 1 steht.
Im einzelnen seien folgende Verbindungen genannt:

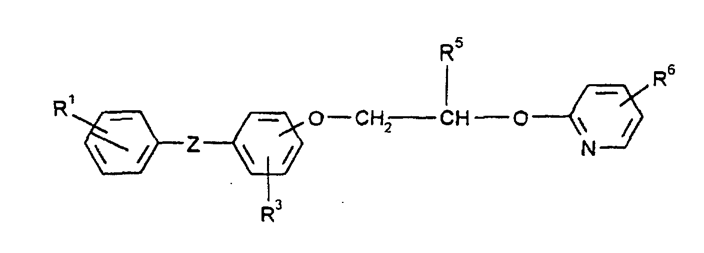

| R¹ | R³ | R⁵ | R⁶ | Z |
|---|---|---|---|---|
| H | H | CH₃ | H | O |
| H | H | CH₃ | 2-Cl | O |
| 5-F | H | CH₃ | H | O |
| H | H | CF₃ | H | O |
| H | H | C₂H₅ | H | O |
| H | H | H | H | O |
| H | H | CH₃ | H | CH₂ |
| H | H | CH₃ | H | C(CH₃)₂ |

Zu den Benzoylharnstoffen gehören Verbindungen der Formel (D): 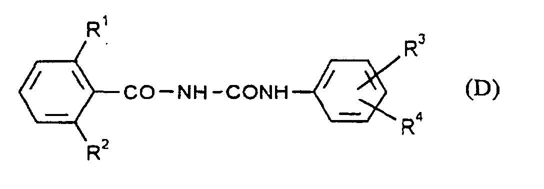 wobei
- R¹: für Halogen steht,
- R²: für Wasserstoff oder Halogen steht,
- R³: für Wasserstoff, Halogen oder C₁₋₄-Alkyl steht,
- R⁴: für Halogen, 1-5-Halogen-C₁₋₄-alkyl, C₁₋₄-Alkoxy, 1-5-Halogen-C₁₋₄-alkoxy, C₁₋₄-Alkylthio, 1-5-Halogen-C₁₋₄-alkylthio, Phenoxy oder Pyridyloxy die gegebenenfalls substituiert sein können durch Halogen, C₁₋₄-Alkyl, 1-5-Halogen-C₁₋₄-alkyl, C₁₋₄-Alkoxy, 1-5-Halogen-C₁₋₄-alkoxy, C₁₋₄-Alkylthio, 1-5-Halogen-C₁₋₄-alkylthio.

Insbesondere seien genannt:

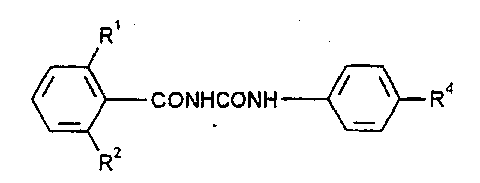

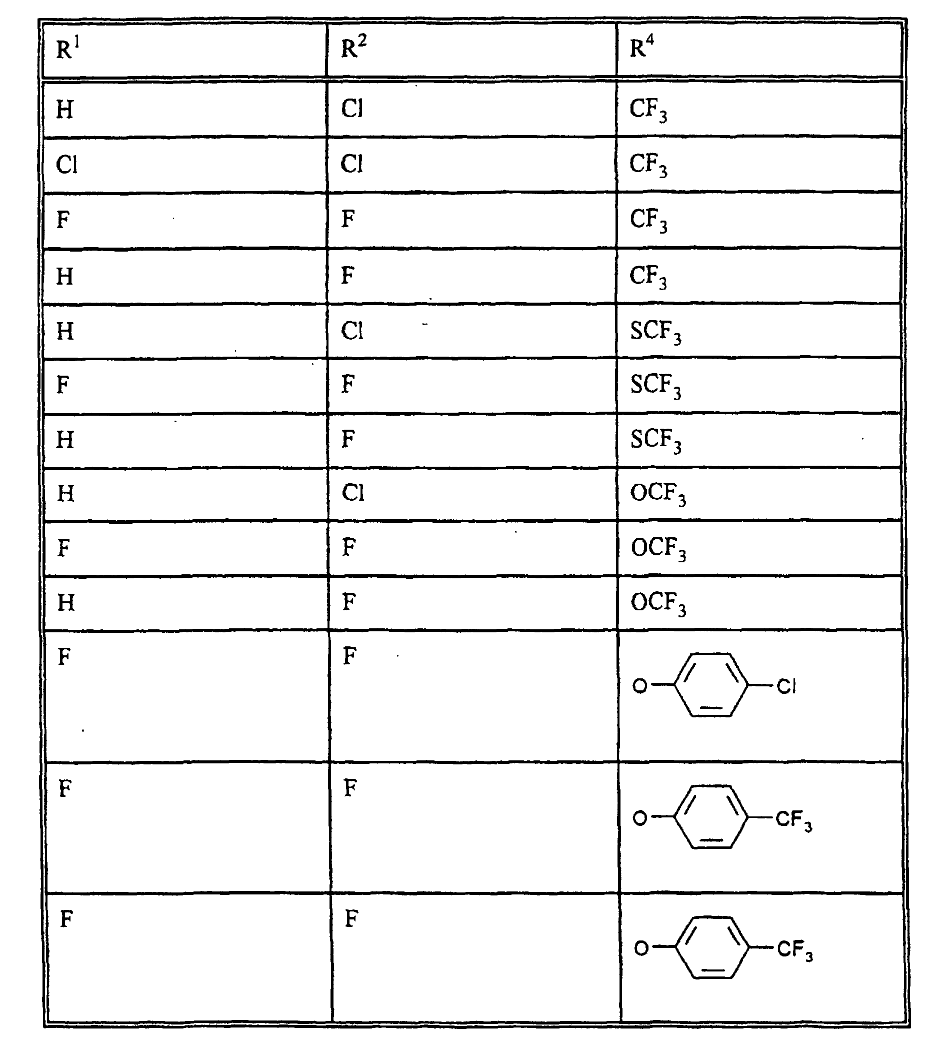

Zu den Triazinen gehören Verbindungen der Formel (E) 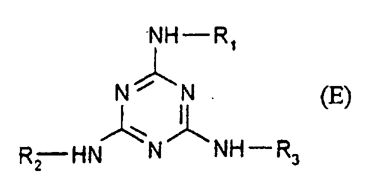 worin
- R₁: für Cyclopropyl oder Isopropyl steht;
- R₂: Wasserstoff, Halogen, C₁-C₁₂-Alkylcarbonyl, Cyclopropylcarbonyl, C₁-C₁₂-Alkylcarbamoyl, C₁-C₁₂-Alkylthiocarbamoyl oder C₂-C₆-Alkenylcarbamoyl bedeutet; und
- R₃: für Wasserstoff, C₁-C₁₂-Alkyl, Cyclopropyl, C₂-C₆-Alkenyl, C₁-C₁₂-Alkylcarbonyl, Cyclopropylcarbonyl, C₁-C₁₂-Alkylcarbamoyl, C₁-C₁₂-Alkylthiocarbamoyl oder C₂-C₆-Alkenylcarbamoyl steht und deren Säureadditionssalze, die für Warmblüter untoxisch sind.

Insbesondere seien genannt:

| R₁ | R₂ | R₃ |
|---|---|---|
| Cyclopropyl | H | H |
| Cyclopropyl | H | CH₃ |
| Cyclopropyl | H | C₂H₅ |
| Cyclopropyl | H | C₃H₇-n |
| Cyclopropyl | H | C₄H₉-n |
| Cyclopropyl | H | C₅H₁₁-n |
| Cyclopropyl | H | C₆H₁₃-n |
| Cyclopropyl | H | C₇H₁₅-n |
| Cyclopropyl | H | C₈H₁₇-n |
| Cyclopropyl | H | C₁₂H₂₅-n |
| Cyclopropyl | H | CH₂-C₄H₉-t |
| Cyclopropyl | H | CH₂CH(CH₃)C₂H₅ |
| Cyclopropyl | H | CH₂CH=CH₂ |
| Cyclopropyl | Cl | C₂H₅ |
| Cyclopropyl | Cl | C₆H₁₃-n |
| Cyclopropyl | Cl | C₈H₁₇-n |
| Cyclopropyl | Cl | C₁₂H₂₅-n |
| Cyclopropyl | H | Cyclopropyl |
| Cyclopropyl | H | COCH₃ |
| Cyclopropyl | H | COCH₃ · HCl |
| Cyclopropyl | H | COC₂H₅· HCl |
| Cyclopropyl | H | COC₂H₅ |
| Cyclopropyl | H | COC₃H₇-n |
| Cyclopropyl | H | COC₃H₇-i |
| Cyclopropyl | H | COC₄H₉-t · HCl |
| Cyclopropyl | H | COC₄H₉-n |
| Cyclopropyl | H | COC₆H₁₃-n |
| Cyclopropyl | H | COC₁₁H₂₃-n |
| Cyclopropyl | COCH₃ | COC₂H₅ |
| Cyclopropyl | COC₃H₇-n | COC₆H₁₃-n |
| Cyclopropyl | COCH₃ | COC₃H₇-n |
| Cyclopropyl | COC₂H₅ | COC₃H₇-n |
| Cyclopropyl | H | COCyclopropyl |
| Cyclopropyl | COCyclopropyl | COCyclopropyl |
| Cyclopropyl | COCH₃ | COCH₃ |
| Isopropyl | H | H |
| Isopropyl | H | COCH₃ |
| Isopropyl | H | COC₃H₇-n |
| Cyclopropyl | H | CONHCH₃ |
| Cyclopropyl | H | CONHC₃H₇-i |
| Cyclopropyl | CONHCH₃ | CONHCH₃ |
| Cyclopropyl | H | CSNHCH₃ |
| Cyclopropyl | H | CONHCH₂CH=CH₂ |
| Cyclopropyl | CONHCH₂CH=CH₂ | CONHCH₂CH=CH₂ |
| Cyclopropyl | CSNHCH₃ | CSNHCH₃ |

Besonders hervorgehoben seien die Wirkstoffe mit den common names Propoxur, Cyfluthrin, Flumethrin, Pyri proxyfen, Methoprene, Diazinon, Amitraz, Fenthion, Imidacloprid.

Die Wirkstoffe können in den Formkörpern allein oder in Mischung untereinander vorliegen.

Die Wirkstoffe liegen in den Formkörpern in Konzentrationen von 0,1-20 Gew.-% vor, bevorzugt zwischen 1-10 Gew.-%.

Die erfindungsgemäßen Formkörper enthalten gegebenenfalls Weichmacher. Weichmacher für biologisch abbaubare Polymere, die zur Anwendung am Tier geeignet sind, bestehen aus den Stoffklassen: Glycerinestern, Citronensäureestern, Milchsäureester, Glycerin, Myristinsäureester, Adipinsäureester und gegebenenfalls Phthalsäureester.

Die Weichmacher liegen in den Formkörpern in Konzentrationen von max. 40 Gew.-% vor, bevorzugt zwischen 0 und 30 Gew.-%.

Die erfindungsgemäßen Formkörper können weiterhin die für Kunststoffe üblichen Additive enthalten. Übliche Additive sind beispielsweise Pigmente, Stabilisatoren, Fließmittel, Gleitmittel, Entformungsmittel und Füllstoffe.

Beispiele für übliche Additive sind:
1. Antioxidantien, dazu gehören
   1.1 Alkylierte Monophenole, z.B. 2,6-Di-tert.butyl-4-methylphenol, 2-Tert.butyl-4,6-dimethylphenol, 2,6-Di-tert.butyl-4-ethylphenol, 2,6-Di-tert.butyl-4-n-butylphenol, 2,6-Di-tert.butyl-4-i-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tricyclohexylphenol, 2,6-Di-tertbutyl-4-methoxymethylphenol.
   1.2 Alkylierte Hydrochinone, z.B. 2,6-Di-tert.butyl-4-methoxyphenol, 2,5-Ditert.butyl-hydrochinon, 2,5-Di-tert.amyl-hydrochinon, 2,6-Diphenyl-4-octadecyloxyphenyl.
   1.3 Hydroxylierte Thiodiphenylether, z.B. 2,2'-Thio-bis-(6-tert.butyl-4-methylphenol), 2,2'-Thio-bis-(4-octylphenol), 4,4'-Thio-bis-(6-tert.butyl-3-methylphenol), 4,4'-Thio-bis-(6-tert.butyl-2-methylphenol).
   1.4 Alkyliden-Bisphenole, z.B. 2,2'-Methylen-bis-(6-tert.butyl-4-methylphenol), 2,2'-Methylen-bis-(6-tert.butyl-4-ethylphenol), 2,2'-Methylen-bis-(4-methyl-6-(α-methylcyclohexyl)-phenol), 2,2'-Methylen-bis-(4-methyl-6-cyclohexylphenol), 2,2'-Methylen-bis-(6-nonyl-4-methylphenol), 2,2'-Methylen-bis-(4,6-di-tert.butylphenol), 2,2'-Ethyliden-bis-(4,6-di-tertbutylphenol), 2,2'-Ethyliden-bis-(6-tert.butyl-4-isobutylphenol), 2,2'-Methylen-bis-[6-(α-methylbenzyl)-4-nonylphenol], 2,2'-Methylen-bis-[6-(α,α-dimethylbenzyl)-4-nonylphenol], 4,4'-Methylen-bis-(2,6-di-tert.butylphenol), 4,4'-Methylen-bis-(6-tert.butyl-2-methylphenol), 1,1-Bis-(5-tert.butyl-4-hydroxy-2-methylphenyl)-butan, 2,6-Di-(3-tert.butyl-5-methyl-2-hydroxybenzyl)-4-methylphenol, 1,1,3-Tris-(5-tert.butyl-4-hydroxy-2-methylphenyl)-butan, 1,1-Bis-(5-tert.butyl-4-hydroxy-2-methylphenyl)-3-n-dodecylmercaptobutan, Ethylenglycolbis-[3,3-bis-(3'-tert.butyl-4'-hydroxyphenyl)-butyrat], Di-(3-tert.butyl-4-hydroxy-5-methylphenyl)-dicyclopentadien, Di-[2-(3'-tert.butyl-2'-hydroxy-5'methylbenzyl)-6-tert.butyl-4-methyl-phenyl]-terephthalat.
   1.5 Benzylverbindungen, z.B. 1,3,5-Tri-(3,5-di-tert.butyl-4-hydroxybenzyl)-2,4,6-trimethylbenzol, Di-(3,5-di-tert.butyl-4-hydroxybenzyl)-sulfid, 3,5-Ditert.butyl-4-hydroxybenzyl-mercaptoessigsäure-isooctylester, Bis-(4-tert.butyl-3-hydroxy-2,6-dimethylbenzyl)-dithiol-terephthalat, 1,3,5-Tris-(3,5-ditert.butyl-4-hydroxybenzyl)-isocyanurat, 1,3,5-Tris-(4-tert.butyl-3-hydroxy-2,6-dimethylbenzyl)-isocyanurat, 3,5-Di-tert.butyl-4-hydroxybenzyl-phosphonsäure-dioctadecylester, 3,5-Di-tert.butyl-4-hydroxybenzyl-phosphonsäure-monoethylester, Calcium-Salz.
   1.6 Acylaminophenole, z.B. 4-Hydroxy-laurinsäureanilid, 4-Hydroxystearinsäureanilid, 2,4-Bis-octylmercapto-6-(3,5-di-tert.butyl-4-hydroxyanilino)-striazin, N-(3,5-di-tert.butyl-4-hydroxyphenyl)-carbaminsäureoctylester.
   1.7 Ester der β-(3,5-Di-tert.butyl-4-hydroxyphenyl)- propionsäure mit ein- oder mehrwertigen Alkoholen, wie z.B. Methanol, Octadecanol, 1,6-Hexandiol, Neopentylglycol, Thiodiethylenglycol, Diethylenglycol, Triethylenglycol, Pentaerythrit, Tris-hydroxyethylisocyanurat, Di-hydroxyethyl-oxalsäurediamid.
   1.8 Ester der β-(5-tert.butyl-4-hydroxy-3-methylphe nyl)-propionsäure mit ein-oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-hydroxyethyl-isocyanurat, Di-hydroxyethyloxyalsäurediamid.
   1.9 Amide der β-(3,5-Di-tert.butyl-4-hydroxyphenyl)- propionsäure, wie z.B. N,N'-Di-(3,5-di-tert.butl-4-hydroxyphenylpropionyl)-hexamethylendiamin, N,N'-(3,5-di-tert.butyl-4-hydroxyphenylpropionyl)-trimethylendiamin, N,N'-Di-(3,5-di-tertbutyl-4-hydroxyphenylpropionyl)-hydrazin.
2. UV-Absorber und Lichtschutzmittel, dazu gehören
   2.1 2-(2'-Hydroxyphenyl)-benztriazole, wie z.B. das 5'-Methyl-, 3',5'-Di-tert.butyl-, 5'-tert.butyl-, 5'-(1,1,3,3-Tetramethylbutyl)-, 5-Chlor-3',5'-di-tert.butyl-, 5-Chlor-3'-tert.butyl-5'-methyl-, 3'-sec.butyl-5'-tert.butyl, 4'-Octoxy-, 3',5'-Di-tert.amyl-, 3',5'-Bis-(α,α-dimethylbenzyl)-Derivat.
   2.2 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydoxy-, 2'-Hydroxy-4,4'-dimethoxy-Derivat.
   2.3 Ester von gegebenenfalls substituierten Benzoesäu ren, wie z.B. 4-tert.butyl-phenylsalicylat, Phenylsalicylat, Octylphenylsalicylat, Dibenzoylresorcin, Bis-(4-tert.butylbenzoyl)-resorcin, Benzoylresorcin, 3,5-Di-tert.butyl-4-hydroxybenzoesäure-2,4-di-tert.butylphenylester, 3,5-Di-tert.butyl-4-hydroxybenzoesäure-hexadecylester.
   2.4 Acrylate, wie z.B. α-Cyan-β,β-diphenylacrylsäure-ethylester beziehungsweise -isooctylester, α-Carbomethoxy-zimtsäuremethylester, α-Cyano-β-methyl-p-methoxy-zimtsäuremethylester beziehungsweise -butylester, α-Carbomethoxy-p-methoxy-zimtsäuremethylester, N-(β-Carbomethoxy-β-cyanovinyl)-2-methyl-indolin.
   2.5 Nickelverbindungen, wie z.B. Nickelkomplexe des 2,2'-Thio-bis-[4-(1,1,3,3-tetramethylbutyl)-phenols], wie der 1:1- oder 1:2-Komplex, gegebenenfalls mit zusätzlichen Liganden, wie n-Butylamin, Triethanolamin oder N-Cyclohexyl-diethanolamin, Nickeldibutyl-dithiocarbamat, Nickelsalze von 4-Hydroxy-3,5-di-tert.butylbenzyl-phosphonsäure-monoalkylestern, wie vom Methyl- oder Ethylester, Nickelkomplexe von Ketoximen, wie von 2-Hydroxy-4-methyl-phenyl-undecylketonoxim, Nickelkomplexe des 1-Phenyl-4-lauroyl-5-hydroxypyrazols, gegebenenfalls mit zusätzlichen Liganden.
   2.6 Sterisch gehinderte Amine, wie z.B. Bis-(2,2,6,6-tetramethylpiperidyl)-sebacat, Bis-(1,2,2,6,6-pentamethylpiperidyl)-sebacat, n-Butyl-3,5-di-tert.butyl-4-hydroxybenzyl-malonsäure-bis-(1,2,2,6,6-pentamethylpiperidyl)-ester, Kondensationsprodukt aus 1-Hydroxyethyl-2,2,6,6-tetramethyl-4-hydroxypiperidin und Bernsteinsäure, Kondensationsprodukt aus N,N'-(2,2,6,6-Tetramethyl-4-piperidyl)-hexamethylendiamin und 4-tert.Octylamino-2,6-dichlor-1,3,5-s-triazin, Tris-(2,2,6,6-tetramethyl-4-piperidyl)-nitrotriacetat, Tetrakis-(2,2,6,6-tetramethyl-4-piperidyl)-1,2,3,4-butantetracarbonsäure, 1,1'-(1,2-Ethandiyl)-bis-(3,3,5,5-tetramethylpiperazinon).
   2.7 Oxalsäurediamide, wie z.B. 4,4'-Di-octyloxy-oxanilid, 2,2'-Di-octyloxy-5,5'di-tert.butyl-oxanilid, 2,2'-Di-dodecyloxy-5,5'-di-tert.butyl-oxanilid,2-Ethoxy-2'-ethyl-oxanilid, N,N'-Bis-(3-dimethylaminopropyl)-oxalamid, 2-Ethoxy-5-tert.butyl-2'-ethyloxanilid und dessen Gemisch mit 2-Ethoxy-2'-ethyl-5,4'-di-tert.butyl-oxanilid Gemische von o-und p-Methoxy- sowie von o-und p-Ethoxy-disubstituierten Oxaniliden.
3. Metalldesaktivatoren, wie z.B. N,N'-Diphenyloxalsäurediamid, N-Salicylal-N'-salicyloylhydrazin, N,N'-Bis-salicyloylhydrazin, N,N'-Bis-(3,5-di-tert.butyl-4-hydroxyphenylpropionyl)-hydrazin, 3-Salicyloylamino-1,2,4-triazol, Bis-benzyliden-oxalsäuredihydrazid.
4. Phosphite und Phosphonite, wie z.B. Triphenylphosphit, Diphenylalkylphosphite, Phenyldialkylphosphite, Tri-(nonylphenyl)-phosphit, Trilaurylphosphit, Trioctadecylphosphit, Distearyl-pentaerythritdiphosphit, Tris-(2,4-di-tert.butylphenyl)-phosphit, Diisodecylpentaerythrit-diphosphit, Di-(2,4-ditert.butylphenyl)-pentaerythritdiphosphit, Tristearyl-sorbit-triphosphit, Tetrakis-(2,4-di-tert.butylphenyl)-4,4'-biphenylen-diphosphonit, 3,9-Bis-(2,4-ditert.butylphenoxy-2,4,8,10-tetraoxa-3,9-diphosphaspiro[5,5]undecan.
5. Peroxidzerstörende Verbindungen, wie z.B. Ester der β-Thiodipropionsäure, beispielsweise der Lauryl-, Stearyl-, Myristyl- oder Tridecylester, Mercaptobenzimidazol, das Zinksalz des 2-Mercaptobenzimidazols, Zink-dibutyldithiocarbamat, Dioctadecyldisulfid, Pentaerythrit-tetrakis-(β-dodecylmercapto)-propionat.
6. Polyamidstabilisatoren, wie z.B. Kupfersalze in Kombination mit Jodiden und/oder Phosphorverbindungen und Salze des zweiwertigen Mangans.
7. Basische Co-Stabilisatoren, wie z.B. Melamin, Polyvinylpyrrolidon, Dicyandiamid, Triallylcyanurat, Harnstoff-Derivate, Amine, Polyamide, Polyurethane, Alkali- und Erdalkalisalze höherer Fettsäuren, beispielsweise Ca-Stearat, Zn-Stearat, Mg-Stearat, Na-Ricinoleat, K-Palmitat, Antimonbrenzcatechinat oder Zinnbrenzcatechinat.
8. Nukleierungsmittel, wie z.B. 4-tert.Butylbenzoesäure, Adipinsäure, Diphenylessigsäure.
9. Füllstoffe und Verstärkungsmittel, wie z.B. Calciumcarbonat, Silikate, Glasfasern, Talk, Kaolin, Glimmer, Bariumsulfat, Metalloxide und -hydroxide, Russ, Graphit.
10. Sonstige Zusätze, wie z.B. Gleitmittel, Emulgatoren, Pigmente, Optische Aufheller, Flammschutzmittel, Antistatika, Treibmittel.

Bei der Herstellung der erfindungsgemäßen Formkörper können die verschiedenen Bestandteile nach bekannten Mischverfahren trocken gemischt und nach bekannten Strangpreß- oder Spritzgußverfahren formgepreßt werden.

Weiterhin ist es möglich, die einzelnen Komponenten durch Lösen in einem gemeinsamen Lösemittel zu mischen und anschließend in einem geeigneten Nichtlösemittel zu fällen oder die Lösung über Eindampfextruder vom Lösemittel zu befreien. Bei der Fällung wird die Lösung bevorzugt durch eine Düse in ein Fällbad gepreßt, das entstehende koagulierende Material als Fäden abgezogen (Naßspinnverfahren). Bevorzugt wird die Fällung mittels der bekannten Trocken-und Naßspinnverfahren durchgeführt.

Die Wahl des Verarbeitungsverfahrens zur Herstellung der erfindungsgemäßen Formkörper richtet sich technisch grundsätzlich nach den rheologischen Eigenschaften des Formkörpermaterials und der Form des gewünschten Gebildes. Die Verarbeitungsverfahren können nach der Verarbeitungstechnologie oder nach der Art der Formgebung eingestellt werden. Bei der Verfahrenstechnologie kann man die Verfahren nach den bei ihnen durchlaufenen rheologischen Zuständen unterteilen. Danach kommen für viskose Formkörpermaterialien Gießen, Pressen, Spritzen und Auftragen und für elastoviskose Polymere Spritzgießen, Strangpressen (Extrudieren), Kalandrieren, Walzen und gegebenenfalls Kneten in Frage. Nach Art der Formgebung eingeteilt, lassen sich die erfindungsgemäßen Formkörper durch Gießen, Tauchen, Pressen, Spritzgießen, Extrudieren, Kalandrieren, Prägen, Biegen, Tiefziehen, Spinnen etc. herstellen.

Diese Verarbeitungsverfahren sind bekannt und bedürfen keiner näheren Erklärung.

Formkörper gemäß vorliegender Erfindung sind Halsbänder, Halsbandanhänger (Medaillons), Ohr-, Schwanz-, Fußbänder, Ohrmarken, Folien, Abziehfolien, Klebestreifen, Streifen, Platten, Granulate. Bevorzugt genannt seien Halsbänder und Medaillons für Hunde und Katzen.

Die Formkörper dienen zur Bekämpfung von Parasiten auf dem Wirtstier, am Wirtstier und in der Umgebung von Wirtstieren wie Haus-, Hobby- und Nutztieren.

Zu den Haus-, Hobby- und Nutztieren gehören Säugetiere wie z.B. Rinder, Schafe, Ziegen, Pferde, Schweine, Hunde, Katzen.

Zu den Schädlingen gehören:
Aus der Ordnung der Anoplura z.B. Haematopinus spp., Linognathus spp., Solenopotes spp., Pediculus spp., Pthirus spp.;
aus der Ordnung der Mallophaga z.B. Trimenopon spp., Menopon spp., Eomenacanthus spp., Menacanthus spp., Trichodectes spp., Felicola spp., Damalinea spp., Bovicola spp;
aus der Ordnung -der Diptera z.B. Aedes spp., Culex spp., Simulium spp., Phlebotomus spp., Chrysops spp., Tabanus spp., Musca spp., Hydrotaea spp., Muscina spp., Haematobosca spp., Haematobia spp., Stomoxys spp., Fannia spp., Glossina spp., Lucilia spp., Calliphora spp., Auchmeromyia spp., Cordylobia spp., Cochliomyia spp., Chrysomyia spp., Sarcophaga spp., Wohlfartia spp., Gasterophilus spp., Oesteromyia spp., Oedemagena spp., Hypoderma spp., Oestrus spp., Rhinoestrus spp., Melophagus spp., Hippobosca spp.,

Aus der Ordnung der Siphonaptera z.B. Ctenocephalides spp., Echidnophaga spp., Ceratophyllus spp..

Aus der Ordnung der Metastigmata z.B. Hyalomma spp., Rhipicephalus spp., Boophilus spp., Amblyomma spp., Haemaphysalis spp., Dermacentor spp., Ixodes spp., Argas spp., Ornithodorus spp., Otobius spp.;
aus der Ordnung der Mesostigmata z.B. Dermanyssus spp., Ornithonyssus spp., Pneumonyssus spp..

Aus der Ordnung der Prostigmata z.B. Cheyletiella spp., Psorergates spp., Myobia spp., Demodex spp., Neotrombicula spp.;
aus der Ordnung der Astigmata z.B. Acarus spp., Myocoptes spp., Psoroptes spp., Chorioptes spp., Otodectes spp., Sarcoptes spp., Notoedres spp., Knemidocoptes spp., Neoknemidocoptes spp. Cytodites spp., Laminosioptes spp..

Wie bereits erwähnt, können die erfindungsgemäßen Formkörper nach Gebrauch granuliert und gemahlen werden und das dabei erhaltene Material zur Bekämpfung Pflanzenschädigender Insekten auf dem Gebiet der Landwirtschaft oder des Garten- und Zierpflanzenanbaus eingesetzt werden.

Zu den Schädlingen, die auf den genannten Gebieten vorkommen, gehören:
Aus der Ordnung der Isopoda z.B. Oniscus asellus, Armadillidium vulgare, Porcellio scaber.
Aus der Ordnung der Diplopoda z.B. Blaniulus guttulatus.
Aus der Ordnung der Chilopoda z.B. Geophilus carpophagus, Scutigera spec.
Aus der Ordnung der Symphyla z.B. Scutigerella immaculata.
Aus der Ordnung der Thysanura z.B. Lepisma saccharina.
Aus der Ordnung der Collembola z.B. Onychiurus armatus.
Aus der Ordnung der Dermaptera z.B. Forficula auricularia.
Aus der Ordnung der Isoptera z.B. Reticulitermes spp..
Aus der Ordnung der Mallophaga z.B. Trichodectes spp., Damalinea spp.
Aus der Ordnung der Thysanoptera z.B. Hercinothrips femoralis, Thrips tabaci.
Aus der Ordnung der Heteroptera z.B. Eurygaster spp., Dysdercus intermedius, Piesma quadrata, Cimex lectularius, Rhodnius prolixus, Triatoma spp.
Aus der Ordnung der Homoptera z.B. Aleurodes brassicae, Bemisia tabaci, Trialeurodes vaporariorum, Aphis gossypii, Brevicoryne brassicae, Cryptomyzus ribis, Aphis fabae, Aphis pomi, Eriosoma lanigerum, Hyalopterus arundinis, Phylloxera vastatrix, Pemphigus spp., Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp. Psylla spp.

Aus der Ordnung der Lepidoptera z.B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp. Bucculatrix thurberiella, Phyllocnistis citrella, Agrotis spp., Euxoa spp., Feltia spp., Earias insulana, Heliothis spp., Laphygma exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana.
Aus der Ordnung der Coleoptera z.B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica.
Aus der Ordnung der Hymenoptera z.B. Diprion spp., Hoplocampa spp., Lasius spp., Monomorium pharaonis, Vespa spp.
Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.
Aus der Ordnung der Siphonaptera z.B. Xenopsylla cheopis, Ceratophyllus spp..
Aus der Ordnung der Arachnida z.B. Scorpio maurus, Latrodectus mactans.

In den folgenden Beispielen werden insektizide Formkörper und ihre Herstellung auf Basis biologisch abbaubarer Polymerer angegeben, die die Erfindung erläutern sollen, ohne sie einzuschränken:
Als Polyesteramid wurde in den Beispielen ein Kondensat aus Adipinsäure, 1,4-Butandiol und ε-Caprolactam eingesetzt. Synthese und biologische Abbaubarkeit sind in EP-A 641 817 beschrieben. Das in den Beispielen eingesetzte Polyesteramid enthält 60 Gew.-% Amidanteile und 40 Gew.-% Esteranteile, die statistisch über das Makromolekül verteilt sind.
Als Polyurethanharnstoff wurde Feststoff, dessen Herstellung in Beispiel 1 in WO 96/1780 beschrieben ist, eingesetzt.

Das in den Beispielen 8 bis 11 verwendete Polyurethan wurde gemäß EP 0 593 975 Beispiel 2 hergestellt und besteht aus 85,22 Gew.-% aliphatischen Polyestereinheiten aufgebaut aus Adipinsäure, Ethylenglykol, Neopentylglykol und Hexandiol, 12,4 Gew.-% Hexamethylendiisocyanat (HDI) ulnd 2,33 Gew.-% Butandiol.

Bei der Druchführung des erfindungsgemäßen Verfahrens geht man im allgemeinen in der Weise vor, daß man die Komponenten in den gewünschten Mengen in beliebiger Reihenfolge miteinander vermischt und dann unter Rühren oder Kneten auf Temperaturen zwischen 50°C und 180°C, vorzugsweise zwischen 60°C und 160°C erhitzt. Die dabei entstehende pastöse Masse oder flüssige Mischung kann nach den für thermoplatisch verarbeitbare polymere üblichen Methoden mit Hilfe von Düsen, Pressen oder anderen geeigneten Vorrichtungen in Formkörper oder Folien überführt werden.

### Beispiele

### Beispiel 1

In einem Haake-Kneter wurden bei 25 Upm 72 g Polyesteramid und 11,1 g Triacetin bei 130°C vorgemischt, 6,9 g Imidacloprid eingetragen und ca. 10 min bei 50 Upm bis zur homogenen Masse geknetet. Die Mischung wurde bei 120°C und 200 bar innerhalb von 2 Minuten zu einer 1 mm dicken Prüfplatte verpreßt. Ein 180 x 50 x 1 mm-Streifen wurde offen gelagert, der freigesetzte Wirkstoff von Zeit zu Zeit mit Wasser von der Oberfläche gewischt und quantitativ über HPLC bestimmt.

| Lagerung [Tage] | 29 | 50 | 64 | 78 | 92 | 106 | 120 | 141 |
|---|---|---|---|---|---|---|---|---|
| freigesetzter Wirkstoff [mg] | 2,82 | 2,55 | 3,14 | 2,14 | 1,77 | 1,12 | 3,87 | 3,29 |

In den Beispielen 2-bis 11 wurde wie in Beispiel 1 verfahren.

In den Beispielen 12 bis 19 wurden die wäßrige Dispersion, der Weichmacher und der Wirkstoff gemischt, getrocknet und wie im Beispiel 1 verpreßt.

### Beispiel 2

| | |
|---|---|
| Zusammensetzung: | 60 Gew.-% Polyesteramid |
| | 30 Gew.-% Milchsäureethylester |
| | 10 Gew.-% Imidacloprid |

| Lagerung [Tage] | 5 | 26 | 40 | 54 |
|---|---|---|---|---|
| freigesetzter Wirkstoff [mg] | 1,38 | 1,73 | 1,90 | 1,17 |

### Beispiel 3

| | |
|---|---|
| Zusammensetzung: | 60 Gew.-% Polyesteramid |
| | 30 Gew.-% Diacetin |
| | 10 Gew.-% Imidacloprid |

| Lagerung [Tage] | 5 | 26 | 40 | 54 |
|---|---|---|---|---|
| freigesetzter Wirkstoff [mg] | 3,04 | 2,87 | 3,44 | 2,50 |

### Beispiel 4

| | |
|---|---|
| Zusammensetzung: | 95 Gew.-% Polyesteramid |
| | 5 Gew.-% Imidacloprid |

| Lagerung [Tage] | 6 | 20 | 34 |
|---|---|---|---|
| freigesetzter Wirkstoff [mg] | 3,49 | 3,08 | 1,08 |

### Beispiel 5

| | |
|---|---|
| Zusammensetzung: | 98 Gew.-% Polyesteramid |
| | 2 Gew.-% Imidacloprid |

| Lagerung [Tage] | 6 | 20 | 34 |
|---|---|---|---|
| freigesetzter Wirkstoff [mg] | 1,02 | 0,56 | 0,55 |

### Beispiel 6

| | |
|---|---|
| Zusammensetzung: | 90 Gew.-% Polyesteramid |
| | 5 Gew.-% Triacetin |
| | 5 Gew.-% Imidacloprid |

| Lagerung [Tage] | 6 | 20 | 34 |
|---|---|---|---|
| freigesetzter Wirkstoff [mg] | 4,13 | 6,11 | 1,96 |

### Beispiel 7

| | |
|---|---|
| Zusammensetzung: | 96 Gew.-% Polyesteramid |
| | 2 Gew.-% Triacetin |
| | 2 Gew.-% Imidacloprid |

| Lagerung [Tage] | 6 | 20 | 34 |
|---|---|---|---|
| freigesetzter Wirkstoff [mg] | 1,29 | 5,73 | 0,72 |

### Beispiel 8

| | |
|---|---|
| Zusammensetzung: | 90 Gew.-% Polyurethan |
| | 10 Gew.-% Imidacloprid |

| Lagerung [Tage] | 6 | 20 | 34 |
|---|---|---|---|
| freigesetzter Wirkstoff [mg] | 3,98 | 2,70 | 1,50 |

### Beispiel 9

| | |
|---|---|
| Zusammensetzung: | 95 Gew.-% Polyurethan |
| | 5 Gew.-% Imidacloprid |

| Lagerung [Tage] | 6 | 20 | 34 |
|---|---|---|---|
| freigesetzter Wirkstoff [mg] | 4,93 | 2,85 | 1,54 |

### Beispiel 10

| | |
|---|---|
| Zusammensetzung: | 80 Gew.-% Polyurethan |
| | 10 Gew.-% Triacetin |
| | 10 Gew.-% Imidacloprid |

| Lagerung [Tage] | 6 | 20 | 34 |
|---|---|---|---|
| freigesetzter Wirkstoff [mg] | 3,79 | 2,99 | 1,46 |

### Beispiel 11

| | |
|---|---|
| Zusammensetzung: | 90 Gew.-% Polyurethan |
| | 5 Gew.-% Triacetin |
| | 5 Gew.-% Imidacloprid |

| Lagerung [Tage] | 6 | 20 | 34 |
|---|---|---|---|
| freigesetzter Wirkstoff [mg] | 4,42 | 3,05 | 1,36 |

### Beispiel 12

| | |
|---|---|
| Zusammensetzung: | 95 Gew.-% Polyurethanharnstoff |
| | 5 Gew.-% Imidacloprid |

| Lagerung [Tage] | 6 | 20 | 34 |
|---|---|---|---|
| freigesetzter Wirkstoff [mg] | 4,75 | 3,29 | 1,42 |

### Beispiel 13

| | |
|---|---|
| Zusammensetzung: | 98 Gew.-% Polyurethanharnstoff |
| | 2 Gew.-% Imidacloprid |

| Lagerung [Tage] | 6 | 20 | 34 |
|---|---|---|---|
| freigesetzter Wirkstoff [mg] | 2,38 | 4,24 | 0,91 |

### Beispiel 14

| | |
|---|---|
| Zusammensetzung: | 90 Gew.-% Polyurethanharnstoff |
| | 5 Gew.-% Triacetin |
| | 5 Gew.-% Imidacloprid |

| Lagerung [Tage] | 6 | 20 | 34 |
|---|---|---|---|
| freigesetzter Wirkstoff [mg] | 3,62 | 2,66 | 1,65 |

### Beispiel 15

| | |
|---|---|
| Zusammensetzung: | 96 Gew.-% Polyurethanharnstoff |
| | 2 Gew.-% Triacetin |
| | 2 Gew.-% Imidacloprid |

| Lagerung [Tage] | 6 | 20 | 34 |
|---|---|---|---|
| freigesetzter Wirkstoff [mg] | 2,14 | 2,36 | 1,67 |

### Beispiel 16

| | |
|---|---|
| Zusammensetzung: | 90 Gew.-% Polyurethanharnstoff |
| | 10 Gew.-% Imidacloprid |

| Lagerung [Tage] | 9 | 23 | 37 | 51 | 65 | 86 |
|---|---|---|---|---|---|---|
| freigesetzter Wirkstoff [mg] | 1,80 | 1,75 | 0,98 | 1,50 | 1,89 | 3,67 |

### Beispiel 17

| | |
|---|---|
| Zusammensetzung: | 80 Gew.-% Polyurethanharnstoff |
| | 10 Gew.-% Glycerin |
| | 10 Gew.-% Imidacloprid |

| Lagerung [Tage] | 9 | 23 | 37 | 51 | 65 | 86 |
|---|---|---|---|---|---|---|
| freigesetzter Wirkstoff [mg] | 1,53 | 2,26 | 1,43 | 2,30 | 3,30 | 5,23 |

### Beispiel 18

| | |
|---|---|
| Zusammensetzung: | 80 Gew.-% Polyurethanharnstoff |
| | 10 Gew.-% Diacetin |
| | 10 Gew.-% Imidacloprid |

| Lagerung [Tage] | 9 | 23 | 37 | 51 | 65 | 86 |
|---|---|---|---|---|---|---|
| freigesetzter Wirkstoff [mg] | 1,74 | 1,96 | 2,06 | 1,87 | 2,07 | 2,88 |

### Beispiel 19

| | |
|---|---|
| Zusammensetzung: | 80 Gew.-% Polyurethanharnstoff |
| | 10 Gew.-% Triacetin |
| | 10 Gew.-% Imidacloprid |

| Lagerung [Tage] | 9 | 23 | 37 | 51 | 65 | 86 |
|---|---|---|---|---|---|---|
| freigesetzter Wirkstoff [mg] | 1,66 | 3,20 | 1,28 | 3,20 | 3,23 | 3,70 |

### Beispiel 20

Eine Prüfplatte gemäß Beispiel 1 wurde mit einer Schlagschere in 1,4 cm (handelsübliche Breite bei Halsbändern) Streifen geschnitten. Die daraus entstehenden Halsbänder wurden möglichst eng (mit einem fingerbreit Zwischenraum) an den Hals der Tiere angepaßt. Die Prüfung wurde an 4 Hunden (Beagles) durchgeführt. vier weitere Hunde wurden als unbehandelte Kontrolle eingesetzt. Die Tiere wurden zweimalig vor sowie in wöchentlichem Abstand nach der Behandlung mit ca. 100 Flöhen [Katzenfloh, C. felis (Siphonaptera: Pulicidae) nüchtern, bis max. 4 Wochen alte Imagines] im Bereich der Schenkelinnenseite infestiert. Aus den ermittelten Daten werden folgende Schlußfolgerungen gezogen: Innerhalb von 24 h nach Behandlung waren die Hunde flohfrei. Die in dieser Prüfung ermittelte Wirksamkeitsdauer beträgt mindestens 115 Tage. Danach wurde das Band abgenommen und mit Hilfe der fortgeführten Belastungsinfestation eine Residualwirksamkeit von max. 7 Wochen ermittelt.

### Beispiel A

### Herstellung einer Dispersion eines Polyurethanharnstoffs

170 g eines Polyesterdiols des Molekulargewichts 1700 aus Adipinsäure und einem Gemisch aus 1,6-Hexandiol und Neopentylglykol im Gewichtsverhältnis 1,9:1 werden 60 Minuten bei 120°C im Vakuum entgast. Unter Stickstoff werden dem Ansatz 0,2 ml Benzoylchlorid und in einem Guß 30,1 g Hexamethylendiisocyanat zugeführt. Nach 30 Minuten Rühren bei 120°C beträgt der NCO-Gehalt 3,2 %. Man löst das Prepolymer bei 50°C in 500 g Aceton, kühlt auf Raumtemperatur und gibt unter schnellem Rühren eine Mischung aus 9,7 g einer 50 %igen, wäßrigen Lösung von AAS-Salz und 1,51 g Ethylendiamin und 20 g Wasser zur acetonischen Lösung. Nach 15 Minuten Rühren wird mit 300 g Wasser versetzt und das Aceton bis 60°C und 140 mbar entfemt. Als Destillationsrückstand verbleiben 505 g. Nach dem Verdünnen mit 11 g Wasser erhält man eine 40 %ige, dünnflüssige, weiße Polyurethanharnstoffdispersion.

Eine Probe der Dispersion wird mit Wasser verdünnt, auf eine Glasplatte gegossen und getrocknet. Man erhält eine klare, klebfreie Folie mit einer Reißdehnung von mehr als 200 %. Die Schichtdicke beträgt 0,25 mm.

### Beispiel B

### Polyesteramid aus einem säureterminierten Oligoester aus Adipinsäure und Butandiol sowie aus Hexamethylendiamin und ε-Caprolactam mit 40 Gew.-% Esteranteil.

346 g (1 mol) säureterminierter Oligoester aus Butandiol und Adipinsäure (SZ 320), 116 g (1 mol) 1,6-Hexamethylendiamin und 72,3 g (0,64 mol) Caprolactam werden zusammengegeben und im Autoklaven unter Eigendruck langsam auf 170°C hochgeheizt. Nach einer Zeit von 3 Stunden wird entspannt und Wasser abdestilliert. Abhängig von der Heftigkeit der Destillation wird auf 220°C hochgeheizt und Vakuum angelegt. Zum Schluß wird mit Ölpumpenvakuum 4 Stunden bei 240°C auspolymerisiert. Man erhält ein hellgelbes Produkt, das sich granulieren läßt. Der Schmelzpunkt laut DSC beträgt 123°C. Die relative Viskosität (1 gew.-%ig in m-Kresol bei 25°C) beträgt 2,8.

Im biologischen Abbautest zeigt das Material einen Mikrobenbewuchs von 102 mg in 14 Tagen.

### Beispiel C

267,0 g eines hydroxylterminierten Oligoesters aus Adipinsäure und Hexandiol/Neopentylglykol (Molverhältnis 3:1) mit einer mittleren Molmasse von 1790 g/mol und 117,4 g eines hydroxylterminierten Oligoesters aus Ethylenglykol und Adipinsäure mit einer mittleren Molmasse von 1957 g/mol werden auf 140°C erhitzt und 30 Minuten im Vakuum entgast. Dazu gibt man dann 10,8 g Butandiol-1,4 und entgast weitere 10 Minuten bei 140°C. Danach werden 0,1 g Dibutylzinndilaurat und 57,2 g Hexamethylendiisocyanat zugegeben und schnell bis zum Zähwerden gerührt. Die Masse wird auf ein Blech ausgegossen und 10 Stunden bei 100°C getempert.

Man erhält ein helles, flexibles Material, das bei den im Text angegebenen Testbedingungen nach zwei Wochen mindestens 60 mg/l Biomassewachstum ermöglicht.

## Patentansprüche

1. Verwendung von Polymergemischen enthaltend
- einen Wirkstoff
- biologisch abbaubare Polymere ausgewählt aus der Gruppe bestehend aus Polyesteramiden, thermoplastischen Polyesterurethanen und Polyurethanharnstoffen
- gegebenenfalls Weichmacher
- gegebenenfalls übliche Zusätze
als Formkörper zur Bekämpfung von Parasiten auf, an und in der Umgebung von Tieren.

2. Verwendung der Polymergemische gemäß Anspruch 1 in Form von Bändern, Medaillons und Ohrmarken zur Bekämpfung von Parasiten auf, an und in der Umgebung von Tieren.

3. Verwendung gemäß einem der Ansprüche 1 oder 2, **dadurch gekennzeichnet, daß** die gebrauchten Formkörper nach Zerkleinem, Granulieren oder Mahlen als Bodengranulate zur Bekämpfung von pflanzenschädigenden Insekten auf Freiland- oder Zimmerpflanzen eingesetzt werden.

4. Wirkstoffhaltige Formkörper, **dadurch gekennzeichnet, daß** sie als Träger biologisch abbaubare Polyesteramide, gegebenenfalls Weichmacher sowie gegebenenfalls übliche Zusätze enthalten.

5. Verfahren zur Herstellung wirkstoffhaltiger Formkörper gemäß Anspruch **4**, **dadurch gekennzeichnet, daß** man biologisch abbaubare Polyesteramide mit Wirkstoffen, gegebenenfalls Weichmachern und gegebenenfalls üblichen Zusätzen vermischt und in üblicher Weise verarbeitet.

## Claims

1. Use of polymer mixtures comprising
- an active compound
- biologically degradable polymers selected from the group consisting of polyester amides, thermoplastic polyester urethanes and polyurethane ureas
- optionally plasticizers
- optionally customary additives
as shaped articles for combating parasites on, around and in the environment of animals.

2. Use of the polymer mixtures according to Claim 1 in the form of tapes, medallions and ear tags for combating parasites on, around and in the enviroment of animals.

3. Use according to either of Claims 1 and 2, **characterized in that** the used shaped articles are employed, after comminution, granulation or grinding, as soil granules for combating phytopathogenic insects on open-air or indoor plants.

4. Shaped articles comprising an active compound, **characterized in that** they comprise biologically degradable polyester amides as the carrier, optionally plasticizers and optionally customary additives.

5. Process for the production of shaped articles comprising active compounds according to Claim 4, **characterized in that** biologically degradable polyester amides are mixed with active compounds, optionally plasticizers and optionally customary additives and the mixture is processed in the customary manner.

## Revendications

1. Utilisation de mélanges de polymères contenant
- une substance active
- des polymères biodégradables choisis dans le groupe constitué de polyesteramides, de polyesteruréthannes thermoplastiques et de polyuréthanne-urées
- le cas échéant, des plastifiants
- le cas échéant, des additifs classiques
sous forme de corps moulés pour combattre des parasites vivant sur des animaux, à leur proximité et dans leur environnement.

2. Utilisation de mélanges polymères suivant la revendication 1 sous forme de colliers, de médailles et de marques d'oreilles pour lutter contre des parasites sur des animaux, à leur proximité et dans leur environnement.

3. Utilisation suivant l'une des revendications 1 ou 2, **caractérisée en ce que** les corps moulés mis en oeuvre sont utilisés après fragmentation, granulation ou broyage comme granulés appliqués au sol pour lutter contre des insectes parasitant des plantes d'extérieur ou des plantes d'appartement.

4. Corps moulés contenant une substance active, **caractérisés en ce qu'**ils contiennent comme support des polyesteramides biodégradables, éventuellement des plastifiants ainsi que, le cas échéant, des additifs classiques.

5. Procédé de production de corps moulés contenant une substance active suivant la revendication 4, **caractérisé en ce qu'**on mélange des polyesteramides biodégradables avec des substances actives, éventuellement des plastifiants et, le cas échéant, des additifs usuels et on met en oeuvre le mélange d'une manière classique.
